Europäisches Patentamt

**European Patent Office**

Office européen des brevets

(19)

(11) Numéro de publication : **0 041 892**
**B1**

(12) **FASCICULE DE BREVET EUROPÉEN**

(45) Date de publication du fascicule du brevet :
29.02.84

(51) Int. Cl.³ : **G 01 C 17/38**

(21) Numéro de dépôt : **81400890.0**

(22) Date de dépôt : **04.06.81**

(54) **Procédés de compensation des perturbations magnétiques dans la détermination d'un cap magnétique, et dispositifs pour la mise en oeuvre de ces procédés.**

(30) Priorité : **05.06.80 FR 8012725**

(43) Date de publication de la demande :
**16.12.81 Bulletin 81/50**

(45) Mention de la délivrance du brevet :
**29.02.84 Bulletin 84/09**

(84) Etats contractants désignés :
**AT BE CH DE GB IT LI NL SE**

(56) Documents cités :
**DE-A- 2 727 132**
**FR-A- 1 085 870**
**US-A- 3 683 668**

(73) Titulaire : **CROUZET**
**128, Avenue de la République**
**F-75011 Paris (FR)**

(72) Inventeur : **Legendarme, Bernard**
**77, rue Denis Papin**
**F-26000 Valence (FR)**
Inventeur : **Moulin, Michel**
**57, ter rue Montplaisir**
**F-26000 Valence (FR)**
Inventeur : **Presset, René**
**"Les Chabertes" Etoile**
**F-26800 Portes les Valence (FR)**
Inventeur : **Dedreuil-Monnet, Louis**
**76, avenue Gambetta**
**F-26000 Valence (FR)**
Inventeur : **Marsy, Jean-Marie**
**7, rue de la Cartoucherie**
**F-26500 Bourg les Valence (FR)**
Inventeur : **Goudon, Jean-Claude**
**17, rue Paul Painlevé**
**F-26000 Valence (FR)**

(74) Mandataire : **Bloch, Robert et al**
**39 avenue de Friedland**
**F-75008 Paris (FR)**

Jouve, 18, rue St-Denis, 75001 Paris, France

Procédés de compensation des perturbations magnétiques dans la détermination d'un cap magnétique, et dispositifs pour la mise en œuvre de ces procédés

L'invention concerne des procédés et des dispositifs ayant pour but de donner à tout instant le cap d'un véhicule, au cours de son déplacement, par rapport au nord magnétique. Il peut s'agir, par exemple, aussi bien d'un véhicule terrestre que d'un aéronef.

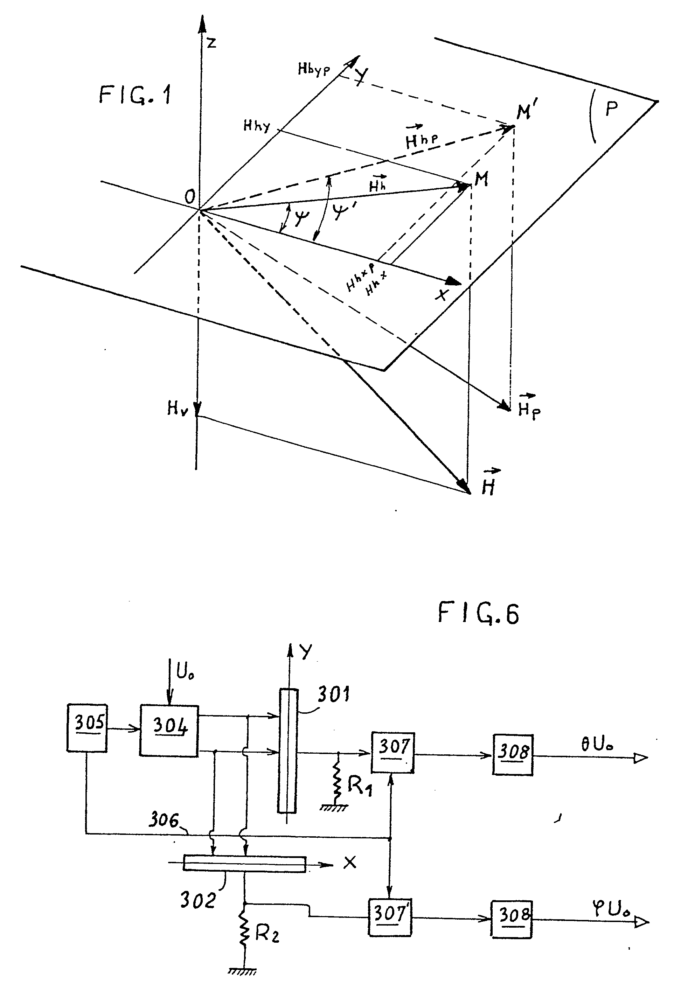

Dans les dispositifs connus de ce genre, il est connu d'utiliser comme capteur un magnétomètre sensible aux variations du champ magnétique terrestre, consécutives au déplacement du véhicule sur lequel ce capteur est fixé. En pratique, on s'arrange pour que les axes orthogonaux OX et OY du magnétomètre soient confondus avec l'axe longitudinal du véhicule et un axe qui lui est perpendiculaire, respectivement, tous deux situés dans un plan P du véhicule (fig. 1) qui peut être horizontal ou sensiblement horizontal, s'il s'agit d'un véhicule terrestre.

Dans ces conditions, le magnétomètre permet d'élaborer des tensions proportionnelles aux composantes horizontales $\overline{Hx}$ et $\overline{Hy}$ du champ magnétique terrestre $\overline{H}$. En théorie, lorsque le véhicule se déplace dans le champ magnétique $\overline{H}$, la projection sur un plan horizontal du vecteur $\overline{H}$ est un vecteur $\overline{Hh}$ dont l'extrémité M se déplace sur un cercle de centre O origine des axes OX et OY du magnétomètre. Dans ces conditions, le cap magnétique réel $\psi$, angle formé entre la direction du véhicule et le nord magnétique, et l'angle $\psi'$, déduit des coordonnées que donne le magnétomètre du point M par rapport à ses axes repères, sont égaux.

En fait, pour une configuration magnétique donnée du véhicule porteur, le point M, lors d'une rotation de 360° du véhicule sur lui-même, ne décrit pas un cercle, mais une ellipse. Cette constatation explique le décalage plus ou moins prononcé et variable entre les angles $\psi$ et $\psi'$ au cours des évolutions du véhicule dans le champ magnétique terrestre.

Ces erreurs de cap sont dues aux perturbations du champ magnétique terrestre en amplitude et direction, résultant de la proximité des structures ferromagnétiques du véhicule et des champs magnétiques induits par les courants électriques susceptibles de circuler dans le véhicule.

Pour corriger les informations de cap ainsi perturbées données par le magnétomètre, une méthode connue consiste à comparer, pour une série de points cardinaux bien définis, le cap réel $\psi$ avec le cap $\psi'$ calculé par le dispositif de détermination de cap, et d'en déduire pour tous ces points les compensations nécessaires pour obtenir $\psi' = \psi$, et qui sont introduites dans la mémoire d'un module de calcul associé au magnétomètre.

Cette méthode nécessite des mesures de cap très précises qui sont longues et contraignantes au niveau opérationnel.

Quand il s'agit d'un véhicule terrestre, et celui-ci étant maintenu sur un plan bien horizontal, on l'oriente, au moyen d'une lunette de visée, d'une façon très précise selon une douzaine de caps répartis sur 360°. Cela nécessite un piquetage rigoureux, à la boussole, du terrain où va évoluer le véhicule pendant les compensations magnétiques de son dispositif de détermination de cap.

Pour un aéronef, on procède de façon analogue, avec un gyromètre de transfert.

Cette méthode de détermination des corrections peut demander plusieurs heures à un équipage de spécialistes.

Les procédés et les dispositifs de compensation de l'invention visent à simplifier considérablement la détermination des coefficients de correction et à gagner un temps très appréciable, en déterminant les coefficients de compensation directement et sans aucune référence de cap à partir des tensions magnétométriques perturbées fournies par le magnétomètre. De plus, l'invention vise à fournir des coefficients qui, après calcul, donnent le cap magnétique réel $\psi$ avec une meilleure précision que la procédure classique.

A cet effet, la présente invention concerne tout d'abord un procédé de compensation des perturbations magnétiques influençant les mesures d'un dispositif de détermination d'un cap magnétique à bord d'un véhicule terrestre comprenant un magnétomètre, fournissant des tensions analogiques proportionnelles aux composantes du champ magnétique terrestre perturbé selon ses axes de référence, dans lequel on introduit dans la mémoire d'un module de calcul associé au magnétomètre des coefficients dits de compensation permettant de corriger les informations délivrées par le magnétomètre pour obtenir le cap réel, caractérisé par le fait qu'on détermine les coefficients de compensation :

— en identifiant la figure géométrique plane fermée ($C_3$) que décrit l'extrémité (M') du vecteur $\overrightarrow{(Hhp)}$ représentatif du champ magnétique perturbé lorsque le véhicule tourne sur lui-même de 360° sur un plan horizontal,

— en transformant cette figure géométrique fermée en un cercle ($C_1$), de rayon quelconque R, centré sur l'origine des axes de référence du magnétomètre et représentant le lieu de l'extrémité M du vecteur $(\overline{Hh})$ représentatif du champ magnétique non perturbé, et

— en calculant les coefficients servant à définir la correspondance entre tous les points de la figure géométrique fermée ($C_3$) et leurs homologues sur le cercle ($C_1$).

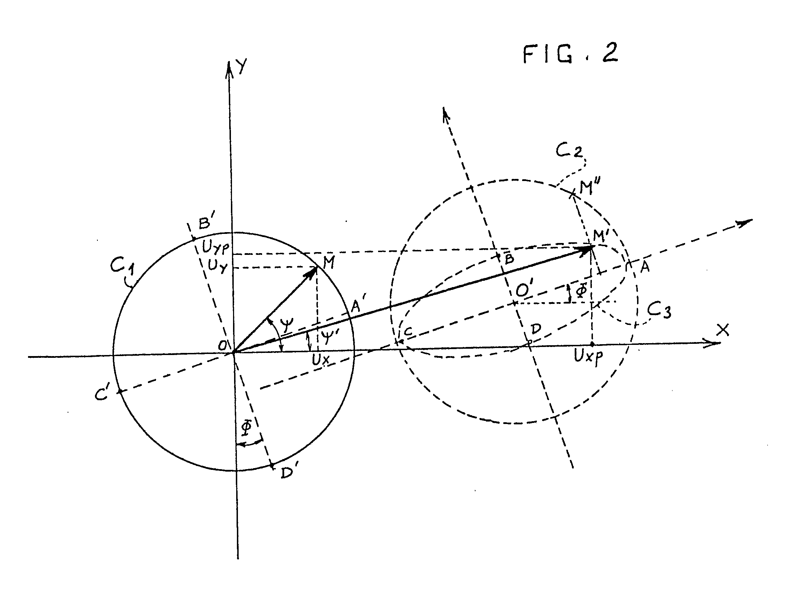

Avec un véhicule terrestre, on l'oriente, sans grande précision, selon huit caps quelconques, non référencés, et à peu près également répartis sur 360°. Pour chaque position, les tensions perturbées Uxp et Uyp fournies par le magnétomètre (fig. 2) représentent les coordonnées Xp et Yp dans le plan horizontal de l'extrémité M' du vecteur champ magnétique terrestre perturbé. On admet que ces huit points sont sur une ellipse que décrit le point M' au cours de la rotation complète du véhicule sur lui-même. Un calculateur détermine les paramètres de cette ellipse et élabore des coefficients de compensation permettant de transformer cette ellipse en un cercle théorique centré sur les axes OX, OY du magnétomètre et correspondant au lieu du point M si les perturbations n'existaient pas.

Ce calculateur, qui peut être solidaire ou non du dispositif de détermination de cap, définit donc les paramètres de l'ellipse et calcule les coefficients correcteurs qu'il est nécessaire d'appliquer aux tensions Uxp, Uyp fournies par le magnétomètre pour passer du cap magnétique perturbé $\psi'$ au cap magnétique réel $\psi$. Lorsque le véhicule terrestre n'est pas horizontal, la composante verticale $\vec{Hv}$ du champ magnétique terrestre influe sur les composantes horizontales $\vec{Hx}$ et $\vec{Hy}$, de la seule composante horizontale $\vec{Hh}$ du champ magnétique terrestre, suivant les valeurs des angles de roulis $\varphi$ et de tangage $\theta$.

Ces dernières corrections sont faites au niveau du dispositif de détermination de cap qui comprend des capteurs, un module de compensation et un visualisateur. Les coefficients de compensation élaborés par le calculateur sont introduits dans une mémoire du module de compensation du dispositif de détermination de cap, au cours de la procédure de compensation.

Le rôle de ce module consiste, à partir des tensions Uxp = kHxp et Uyp = kHyp fournies par le magnétomètre, et de celles fournies par un inclinomètre, à élaborer des signaux électriques sous forme de tensions analogiques, correspondant au sinus et au cosinus du cap compensé, c'est-à-dire le cap réel $\psi$. Ces signaux sont dirigés vers un module de visualisation constitué par une rose graduée tournante et un index fixe permettant de visualiser le cap réel $\psi$ du véhicule par rapport au nord magnétique.

Dans le plan P de la figure 1 sont situés les deux axes OX et OY du magnétomètre, l'axe OZ représentant la verticale si on suppose le plan P horizontal. Dans ces conditions, le champ magnétique $\vec{H}$, que l'on sait incliné par rapport à l'horizontale d'un angle variant suivant le lieu géographique, peut se découper suivant les axes OX, OY, OZ en trois vecteurs :

— $\vec{Hv}$, composante verticale
— $\vec{Hhx}$ et $\vec{Hhy}$, composantes de $\vec{Hh}$, projection de $\vec{H}$ dans le plan P.

S'il n'existait pas de perturbations du champ magnétique terrestre $\vec{H}$ au voisinage du véhicule, l'angle $\widehat{XOM}$ représenterait le cap magnétique réel $\psi$. En fait, le champ $\vec{H}$ étant perturbé, le magnétomètre mesure le champ $\vec{Hp}$ dont la composante $\vec{Hhp}$ dans le plan P détermine un point M' tel que : $\widehat{XOM}$ est un angle $\psi'$ correspondant à un faux cap magnétique. Le magnétomètre délivre alors les deux tensions analogiques perturbées Uxp = kHxp et Uyp = kHyp, k étant un coefficient correspondant au facteur d'échelle du magnétomètre.

La présente invention concerne également un procédé de compensation des perturbations magnétiques influençant les mesures d'un dispositif de détermination d'un cap magnétique à bord d'un aéronef comprenant un magnétomètre, fournissant des tensions analogiques proportionnelles aux composantes du champ magnétique terrestre perturbé selon ses axes de référence, dans lequel on introduit dans la mémoire d'un module de calcul associé au magnétomètre des coefficients dits de compensation permettant de corriger les informations délivrées par le magnétomètre pour obtenir le cap réel, caractérisé par le fait que la compensation s'effectue :

— en supposant que le module de champ terrestre est constant entre deux mesures successives,
— en examinant l'évolution du module du champ magnétique terrestre perturbé dans l'espace (ellipsoïde),
— en calculant, de façon itérative, les coefficients de compensation permettant de ramener l'évolution du module du champ magnétique terrestre d'un ellipsoïde à une sphère théorique centrée sur les axes du magnétomètre, afin de définir la correspondance entre les mesures perturbées et les mesures réelles.

L'invention concerne également des dispositifs pour la mise en œuvre desdits procédés de compensation selon les revendications 8 et 12.

Si le ferromagnétisme d'un véhicule terrestre n'avait pas d'incidence sur le champ magnétique terrestre, l'extrémité M de la composante horizontale $\vec{Hh}$ de ce champ magnétique décrirait un cercle $C_1$ de centre O origine des repères OX et OY du magnétomètre (fig. 2).

En fait, il existe des perturbations dites « fer dur » dues aux champs permanents liés aux structures ferromagnétiques du véhicule qui se sont aimantées en cours de fabrication ou sous l'influence de champs magnétiques d'origine électrique. Ces champs permanents sont liés au véhicule et tournent avec lui.

Il en résulte que le magnétomètre mesure les composantes d'un vecteur dont l'extrémité M" se déplace sur un cercle $C_2$ dont le centre O' est décalé de (Xo, Yo) par rapport à l'origine des axes du magnétomètre.

Dans l'espace, et dans un repère lié au magnétomètre, on peut représenter ces champs permanents par un vecteur :

$$\vec{Ho} = Xo\,\vec{i} + Yo\,\vec{j} + Zo\,\vec{v}$$

$\vec{i}$, $\vec{j}$ et $\vec{v}$ représentant les axes orthogonaux repérés du magnétomètre trois axes monté sur le véhicule terrestre. Le véhicule évoluant sur un plan proche de l'horizontale, un magnétomètre deux axes peut suffire.

3

**0 041 892**

Il existe une deuxième sorte de perturbations dites « fer doux », affectant les mesures du magnétomètre, et qui sont dues aux champs induits par l'action du champ magnétique terrestre. Ces champs ne tournent pas avec le véhicule, mais leurs polarités et leurs amplitudes varient en fonction de la direction et de l'amplitude du champ magnétique terrestre par rapport au véhicule.

La représentation de ces champs induits $\overrightarrow{Hi}$ peut s'écrire sous la forme :

$$\overrightarrow{Hi} = (kxxHx + kxyHy + kxzHz)\vec{i} + (kyxHx + kyyHy + kyzHz)\vec{j} + (kzxHx + kzyHy + kzxHz)\vec{v}$$

soit, sous la forme matricielle :

$$\overrightarrow{Hi} = K \cdot R \cdot \vec{H}$$

R étant la matrice de passage du repère géographique (Nord, Est, Verticale) dans le repère du magnétomètre.

Toutes perturbations magnétiques comprises, le magnétomètre mesure un champ perturbé $\overrightarrow{Hp}$ tel que :

$$\overrightarrow{Hp} = \overrightarrow{Ho} + K \cdot R \cdot \vec{H}. \tag{1}$$

Pour l'application de la recherche du cap d'un véhicule terrestre, il est suffisant de résoudre l'équation (1) dans le plan du magnétomètre deux axes, soit :

$$\vec{H} = R^{-1} K^{-1} (\overrightarrow{Hp} - \overrightarrow{Ho}).$$

Pour des angles $\theta$ et $\varphi$ de faibles amplitudes, les composantes horizontales du champ compensé peuvent s'écrire

$$\begin{cases} Hh'x = Ixx(Hxp - Hxo) + Ixy(Hyp - Hyo) - \theta Hv \\ Hh'y = Iyx(Hxp - Hxo) + Iyy(Hyp - Hyo) + \varphi Hv \end{cases}$$

$\begin{bmatrix} Ixx & Ixy \\ Iyx & Iyy \end{bmatrix}$ étant la matrice de compensation « fers doux »,

Hxo et Hyo les composantes du champ dues aux perturbations de « fers durs », et
Hv la composante verticale du champ magnétique terrestre.
On obtient le cap magnétique compensé, ou réel, par l'équation :

$$\psi = arctg\ (Hh'y/Hh'x)$$

Les paramètres Hxo, Hyo, Ixx, Ixy, Iyx et Iyy sont déterminés par le procédé suivant.
L'expression du champ magnétique perturbé Hp mesuré par un magnétomètre deux axes suivant ses axes OX et OY peut s'écrire :

$$\begin{aligned} Hpx &= Hxo + kxxHx + kxyHy + kxzHz \\ Hpy &= Hyo + kyxHx + kyyHy + kyzHz \end{aligned} \tag{2}$$

Lorsque le véhicule est horizontal au moment de la procédure de compensation, on a :
Hz = Hv, composante verticale, qui est constante pour un lieu donné.
Hx = Hh cos $\psi$ et Hy = Hh sin $\psi$ (Hh étant la composante horizontale du champ magnétique terrestre $\vec{H}$).
Hxo et Hyo sont deux champs constants dus au « fer dur ».
Lorsque le point M″ décrit le cercle $C_2$ sur le plan horizontal, le point M′ décrit une ellipse $C_3$ de centre :

$$\begin{aligned} Xo &= (Hxo + kxzHz) \\ Yo &= (Hyo + kyzHz) \end{aligned}$$

les longueurs des axes de cette ellipse dépendent de kxx, kyy et ont une inclinaison $\Phi$ par rapport aux axes de référence qui dépendent de kxy et kyx.
Le magnétomètre est constitué de façon connue par deux sondes orthogonales dont les axes sont avantageusement confondus avec les axes du véhicule porteur, ou parallèles à ceux-ci.
Dans ces conditions, le magnétomètre délivre des informations analogiques sous la forme de deux tensions perturbées Uxp et Uyp telles que :

4

$$Uxp = Uxo + kxzUz + kxxUx + kxyUy$$
$$Uyp = \underbrace{Uyo + kyzUz}_{} + \underbrace{kyxUx + kyyUy}_{}$$

<div align="center">

Terme constant    Terme variable      (3)
fer dur          fer doux

</div>

$\psi$ étant l'angle de cap magnétique lu sur le dispositif de détermination de cap, après correction, on a :

Ux tension non perturbée = Uh cos $\psi$ avec Uh = kHh
Uy tension non perturbée = Uh sin $\psi$ avec Uh = kHh
Uz = Uo tension constante correspondant à la composante verticale kHv.

La méthode de compensation consiste, à partir de quelques mesures relatives à des orientations différentes du véhicule sur un plan bien horizontal et réparties sur 360°, à calculer les coefficients :

$$Xo = Uxo + kxzUz$$
$$Yo = Uyo + kyzUz$$
$$Ixx, Ixy, Iyx, Iyy,$$

tels que :

$$Ux = UxpIxx + UypIxy - (Xo + X\tau + Xv) - \theta U.$$
$$Uy = UypIyy + UxpIyx - (Yo + Y\tau + Yv) + \varphi U. \qquad (4)$$

représentent les tensions corrigées nécessaires pour obtenir le cap réel $\psi$, $X\tau$ et $Y\tau$ étant des facteurs de corrections correspondant à des déplacements de masses magnétiques et Xv et Yv étant des facteurs de corrections correspondant à la présence temporaire de courants électriques à bord du véhicule.

Pour déterminer les coefficients, il faut :

1. Déterminer l'ellipse $C_3$

Pour cela, on admet que les tensions Uxp, Uyp fournies par le magnétomètre pour chacune des orientations du véhicule correspondent aux coordonnées, selon les axes OX, OY, des divers points M' de l'ellipse, soit :

$$M'_1(Ux_1p, Uy_1p), M'_2(Ux_2p, Uy_2p) ... M'n(Uxnp, Uynp).$$

En pratique, cinq à huit points suffisent pour définir cette ellipse.

2. Transformer l'ellipse $C_3$ en un cercle $C_1$

On élabore, au moyen d'un calculateur ou par un procédé graphique, les transformations à faire subir à ces tensions pour que cette ellipse $C_3$ soit transformée en un cercle $C_1$ concentrique aux axes OX et OY. On passe du point M' sur l'ellipse $C_3$ au point M correspondant sur ce cercle $C_1$ par une translation de vecteur $\overrightarrow{O'O}$ (O' étant le centre de l'ellipse) et par une double affinité de rapport R/a suivant l'axe OX et R/b suivant l'axe OY, R étant le rayon du cercle $C_1$ et a et b les demi-axes de l'ellipse $C_3$. Le rayon R peut être choisi arbitrairement sans modifier les angles.

Ces deux transformations correspondent à la compensation des effets de « fer dur » et de « fer doux ».

3. Déterminer la correspondance entre un point de l'ellipse $C_3$ et son correspondant sur le cercle $C_1$

On affecte à tout point M' de l'ellipse $C_3$ son correspondant M sur le cercle théorique $C_1$, tel que l'angle $\overrightarrow{OX}$, $\overrightarrow{OM}$ représente le cap magnétique $\psi$ non perturbé du véhicule, déduit de l'angle mesuré $\overrightarrow{OX}$, $\overrightarrow{OM'}$ correspondant au cap $\psi'$ faussé par les perturbations.

La correspondance entre un point de l'ellipse et un point du cercle est finalement faite par le choix d'une rotation des points du cercle $C_1$ autour de son centre O.

La méthode utilise le choix suivant : après la translation $\overrightarrow{O'O}$ et la double affinité, la rotation est réduite à une identité, c'est-à-dire à une rotation d'angle nul. Ceci signifie que les coefficients de perturbations de fer doux constituent une matrice symétrique, et que Ixy = Iyx. En conséquence, les points transformés de A.B.C.D. sont les points A'B'C'D' comme indiqué figure 2, avec O'A, O'B, O'C et O'D respectivement parallèles à OA', OB', OC' et OD'.

On effectue des mesures, par exemple suivant cinq orientations du véhicule en position horizontale et régulièrement espacées sur un tour.

On relève ainsi les mesures du magnétomètre $(Ux_1, Uy_1)$, $(Ux_2, Uy_2)$ ... $(Ux_5, Uy_5)$.

L'équation de l'ellipse dans le repère XOY du magnétomètre s'écrit :

$$\alpha Ux^2 + \beta Uy^2 + \gamma Ux \cdot Uy + \delta Ux + \varepsilon Uy = 1$$

Les paramètres $(\alpha, \beta, \gamma, \delta, \varepsilon) = V$, définissant l'ellipse, vérifient l'équation suivante : $W \cdot V = Z$ avec

$$Z = \begin{bmatrix} 1 \\ 1 \\ 1 \\ 1 \\ 1 \end{bmatrix} \quad ; \quad \begin{bmatrix} Ux_1^2, & Uy_1^2, & Ux_1 \cdot Uy_1, & Ux_1, & Uy_1 \\ Ux_2^2, & Uy_2^2, & Ux_2 \cdot Uy_2, & Ux_2, & Uy_2 \\ \vdots & \vdots & \vdots & \vdots & \vdots \\ \vdots & \vdots & \vdots & \vdots & \vdots \\ Ux_5^2, & Uy_5^2, & Ux_5 \cdot Uy_5, & Ux_5, & Uy_5 \end{bmatrix}$$

Le calculateur inverse la matrice W et effectue le produit :

$$V = W^{-1} \cdot Z$$

En pratique, on utilise avantageusement les mesures selon huit orientations et on élabore les paramètres V en appliquant une méthode classique, dite des moindres carrés, pour éliminer une partie du bruit de mesure.

On calcule ensuite les paramètres A, b, $\Phi$, Xo, Yo de l'ellipse, telle que représentée sur la figure 2. Ces paramètres sont les suivants :

a = demi-grand axe de l'ellipse $C_3$,
b = demi-petit axe de l'ellipse $C_3$,
$\Phi$ = angle d'inclinaison des axes de l'ellipse par rapport aux axes du magnétomètre,
$\left.\begin{array}{l} Xo \\ Yo \end{array}\right\}$ coordonnées du centre de l'ellipse $C_3$.

$$Xo = \frac{\gamma\varepsilon - 2\,\beta\delta}{4\,\alpha\beta - \gamma^2}$$

$$Yo = \frac{\gamma\delta - 2\,\alpha\varepsilon}{4\,\alpha\beta - \gamma^2}$$

$$t_g\,\Phi = \frac{\beta - \alpha + k\sqrt{(\alpha - \beta)^2 + \gamma^2}}{\gamma}$$

$$a = \sqrt{\frac{2}{\alpha + \beta + \dfrac{\gamma}{\sin 2\,\Phi}}}, \quad \text{avec} \quad \begin{cases} k = 1 & \text{si} \quad \alpha + \beta > 0 \\ k = -1 & \text{si} \quad \alpha + \beta < 0 \end{cases}$$

$$b = \sqrt{\frac{2}{\alpha + \beta - \dfrac{\gamma}{\sin 2\,\Phi}}}$$

Connaissant les paramètres de l'ellipse $C_3$, on détermine les corrections pour la transformer en un cercle $C_1$. Pour cela, on effectue la translation :

$$Ux - Xo$$
$$Uy - Yo$$

et une double affinité.

Pour appliquer l'affinité, on se place dans le repère de l'ellipse :

$$Uex = \cos \Phi(Ux - Xo) + \sin \Phi(Uy - Yo)$$
$$Uey = \sin \Phi(Ux - Xo) + \cos \Phi(Uy - Yo)$$

On écrit l'affinité :

$$Xe = \frac{R}{a}\left[\cos \Phi(Ux - Xo) + \sin \Phi(Uy - Yo)\right]$$

$$Ye = \frac{R}{b}\left[-\sin \Phi(Ux - Xo) + \cos \Phi(Uy - Yo)\right]$$

soit, en retournant dans les références du magnétomètre :

$$X = \cos \Phi Xe - \sin \Phi Ye$$
$$Y = \sin \Phi Xe + \cos \Phi Ye$$

soit :

$$X = (X - Xo)\left(\frac{R}{a}\cos^2 \Phi + \frac{R}{b}\sin^2 \Phi\right) + (y - Yo)$$

$$\left(\frac{R}{a}\sin \Phi \cos \Phi - \frac{R}{b}\sin \Phi \cos \Phi\right)$$

$$Y = (X - Xo)\left(\frac{R}{a}\sin \Phi \cos \Phi - \frac{R}{b}\sin \Phi \cos \Phi\right) + (Y - Yo)$$

$$\left(\frac{R}{a}\sin^2 \Phi + \frac{R}{\cdot b}\cos^2 \Phi\right).$$

Le traitement final, pour obtenir les paramètres de compensation, est donc le suivant :

Compensation de fers durs $\quad\left\{\begin{array}{l} - Xo \\ - Yo \end{array}\right.$

Compensation de fers doux $\left\{\begin{array}{l} Rxx = \dfrac{R}{a}\cos^2 \Phi + \dfrac{R}{b}\sin^2 \Phi \\[2mm] Ryx = Rxy = \left(\dfrac{R}{a} - \dfrac{R}{b}\right)\sin \Phi \cos \Phi \\[2mm] Ryy = \dfrac{R}{a}\sin^2 \Phi + \dfrac{R}{b}\cos^2 \Phi \end{array}\right.$

avec R : rayon du cercle $C_1$, valeur arbitraire, et $Ryx = Rxy$ puisque la matrice est symétrique.

Examinons maintenant le cas d'un aéronef.

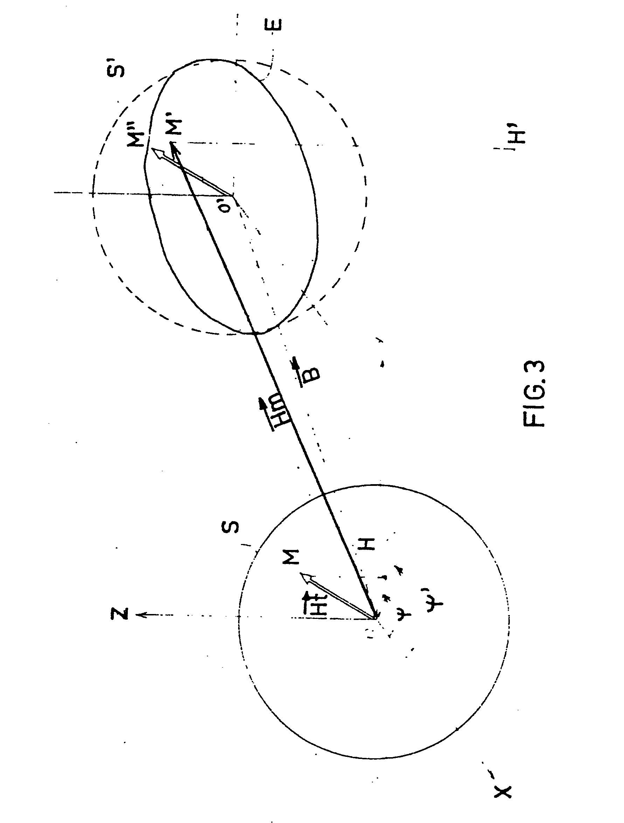

Si le ferromagnétisme de l'aéronef n'avait pas d'influence sur le champ magnétique terrestre, l'extrémité M du vecteur représentant le champ magnétique décrirait une sphère (figure 3) de centre O, origine du repère OX, OY, OZ du magnétomètre, en admettant que l'aéronef puisse prendre toutes les attitudes possibles.

En fait, le magnétomètre mesure les composantes d'un vecteur dont l'extrémité M″ se déplace dans une sphère Sz dont le centre O′, à cause des champs permanents de fers durs, est translaté de $B_1$, $B_2$, $B_3$, par rapport à l'origine des axes du magnétomètre.

Dans l'espace et dans un repère lié au magnétomètre on peut représenter ces champs permanents par un vecteur :

$$\vec{B} = B_1\vec{i} + B_2\vec{j} + B_3\vec{k}$$

$\vec{i}, \vec{j}, \vec{k}$ représentant les axes orthogonaux repérés du magnétomètre trois axes monté sur l'aéronef.

La représentation des champs induits de fers doux $\vec{Hi}$ peut s'écrire sous la forme :

$$\vec{H_i} = (k_{11} H_{t1} + k_{12} H_{t2} + k_{13} H_{t3})\vec{i} + (k_{21}H_{t1} + k_{22}H_{t2} + k_{23}H_{t3})\vec{j} + (k_{31}H_{t1} + k_{32}H_{t2} + k_{33}H_{t3})\vec{k}$$

soit sous forme matricielle $\vec{H_i} = K\vec{H_{ta}}$

$H_{ta}$ étant le champ terrestre en axes-aéronef.

Toutes perturbations comprises, le magnétomètre mesure un champ perturbé $\vec{Hm}$ tel que :

$$\vec{H_{ma}} = \vec{H_{ta}} + \vec{B} + K \cdot \vec{H_{ta}} = \vec{B} + (I + K)\vec{H_{ta}}$$

Pour avoir le cap, il suffit de calculer

$$\vec{H_{ta}} = (I + K)^{-1}(\vec{H_{ma}} - \vec{B})$$

et de calculer ensuite les composantes horizontales du champ terrestre compensé grâce à une référence de verticale.

On va rappeler les équations qui permettent de calculer le cap magnétique à partir d'une référence de verticale et des mesures du champ magnétique terrestre dans un aéronef. Soit

[A], d'axes (X, Y, Z) le repère aéronef, et

[Gm], d'axes (Nm, Em, V), le repère géomagnétique local.

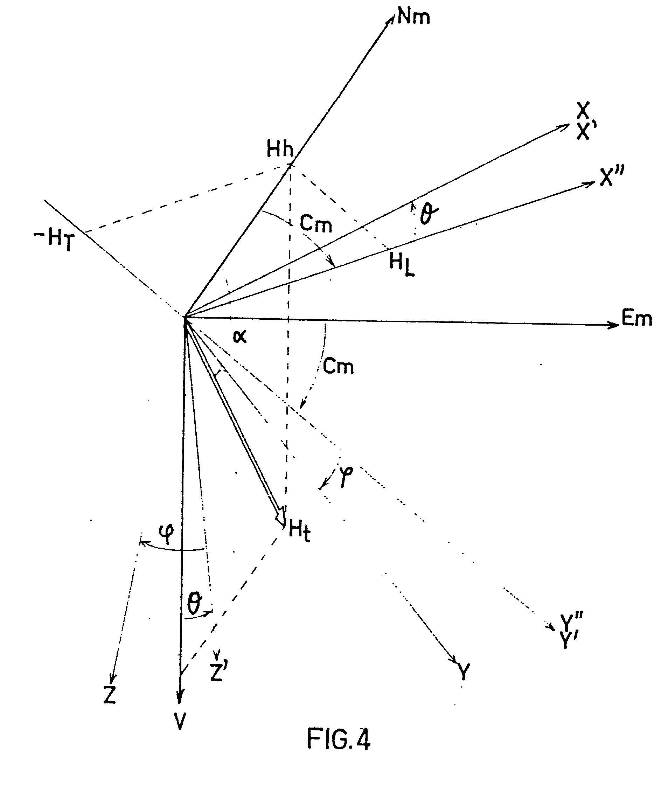

A tout instant t, le passage de [A] sur [Gm] est défini par les rotations successives $(-\varphi, -\theta, -Cm)$, figure 4, avec

$\varphi$ : angle de roulis,

$\theta$ : assiette longitudinale,

Cm : cap magnétique.

Le vecteur champ magnétique terrestre est défini par

$Ht = (H_{t1} + H_{t2} + H_{t3})$ dans [A]

$Ht = (Hn, O, Hv)$ dans [Gm].

Les paramètres dans le repère [Gm] se déduisent des informations de module et d'inclinaison par

$$\begin{cases} H_n = H_t \cos \alpha & H_t : \text{module du vecteur champ,} \\ H_v = H_t \sin \alpha & \alpha : \text{inclinaison du champ par rapport au plan horizontal.} \end{cases}$$

On trouve alors les relations suivantes :

$$H_n = H_t \cos \alpha = (\cos \theta \cos Cm)H_{t1} + (\cos Cm \sin \theta \sin \varphi - \sin Cm \cos \varphi)H_{t2} +$$
$$+ (\cos Cm \sin \theta \cos \varphi + \sin Cm \sin \varphi)H_{t3} \qquad (11)$$

$$O = \sin Cm \cos \theta H_{t1} + (\sin Cm \sin \theta \sin \varphi + \cos Cm \cos \varphi)H_{t2}$$
$$+ (\sin Cm \sin \theta \cos \varphi - \cos Cm \sin \varphi)H_{t3} \qquad (12)$$

$$H_v = H_t \sin \alpha = - \sin \theta \, H_{t1} + \sin \varphi \cos \theta \, H_{t2} + \cos \varphi \cos \theta \, H_{t3} \qquad (13)$$

A partir de la deuxième équation, on peut calculer le cap magnétique Cm

$$Cm = \text{Arct}_g \left( \frac{H_{t3} \sin \varphi - H_{t2} \cos \varphi}{H_{t1} \cos \theta + H_{t2} \sin \theta \sin \varphi + H_{t3} \sin \theta \cos \varphi} \right) + k\pi$$

L'ambiguïté de 180° due à la fonction arctangente est levée en examinant le signe de cos Cm (obtenu à partir des équations (11) et (12)) :

$$\cos Cm = \frac{H_{t1} \cos \theta + H_{t2} \sin \theta \sin \varphi + H_{t3} \sin \theta \cos \varphi}{H_t \cos \alpha}$$

$\alpha$, par définition, étant compris entre

$$-\frac{\pi}{2} \quad \text{et} \quad +\frac{\pi}{2} \quad \text{donc} \quad H_t \cos \alpha > 0$$

L'expression de cos Cm est alors du signe de son numérateur qui est le dénominateur de l'expression tg Cm, la séquence de lever de doute sur Cm ne nécessitant donc aucun calcul algébrique supplémentaire.

Pour calculer les compensations de fers durs et de fers doux, on se sert uniquement des mesures délivrées par le magnétomètre.

Pour un vecteur, seule l'information de son module est indépendante du trièdre de mesure. Le module du vecteur champ magnétique terrestre ne dépend donc pas du trièdre de mesure et par hypothèse a un gradient suffisamment faible pour être négligé. La variation dans le temps peut être considérée comme nulle.

Ces remarques se formulent par l'équation :

$$\frac{d\overrightarrow{H_t}}{dt} = \overrightarrow{0} \text{ pour tout t}$$

$$\overline{H_t} = \sqrt{H_{t1}^2 + H_{t2}^2 \, H_{t3}^2} \, ,$$

$H_{t1}$, $H_{t2}$, $H_{t3}$ étant les composantes du champ magnétique en axes aéronef et $\overline{Ht}$ le module du champ magnétique terrestre.

La modélisation des perturbations par des fers durs et des fers doux (le vecteur mesuré se déplace sur un ellipsoïde) conduit donc à l'expression suivante des composantes mesurées :

$$H_{mi} = H_{ti} + B_i + \sum_{j=1}^{3} kij\, H_{tj}$$

L'équation du module du champ mesuré s'écrit alors, en ne gardant que les termes du permier ordre (car on suppose que les perturbations sont des infiniment petits du permier ordre par rapport aux composantes mesurées),

$$\overline{H_m^2} = \overline{H_t^2} + 2\sum_{i=1}^{3} B_i\, H_{ti} + 2\sum_{j=1}^{3} H_{ti} \sum_{j=1}^{3} kij\, H_{tj} + \varepsilon$$

avec $\varepsilon$, somme des infiniment petits du 2ème et 3ème ordre.

Si on dérive cette expression par rapport au temps t, on obtient

$$\frac{d\overline{H_m^2}}{dt} = \frac{d\overline{H_{t2}}}{dt} + 2\sum_{i=1}^{3} Bi\frac{dH_{ti}}{dt} + \sum_{i=1}^{3}\sum_{j=1}^{3} (kij + kji)\frac{d(H_{ti} + H_{tj})}{dt} .$$

$H_t$ étant une constante, on obtient :

$$\frac{d\overline{H_m^2}}{dt} = 2\sum_{i=1}^{3} Bi\frac{dH_{ti}}{dt} \sum_{i=1}^{3}\sum_{j=1}^{3} (kij + kji)\frac{d(H_{ti} + H_{tj})}{dt}$$

L'équation est linéaire et fait apparaître neuf paramètres. Elle ne permet d'estimer que la partie symétrique des fers doux (kij + kji). De plus, les coefficients des paramètres sont les dérivés des composantes du champ terrestre qui ne peuvent être qu'approximées par les composantes estimées du champ terrestre. Les neuf paramètres sont estimés par la méthode classique des moindres carrés récursifs.

A chaque instant d'échantillonnage, on prélève les informations du magnétomètre et on tient compte de ces nouvelles mesures pour améliorer l'estimation des paramètres.

A un instant n, on a donc :

$$d(\overrightarrow{H_m^2}) = \overline{H_{mn}^2} - \overline{H_{mn-1}^2} \qquad et \qquad \overrightarrow{H_{tn}} = [I + K_{n-1}]^{-1} (\overrightarrow{H_{mn}} - \overrightarrow{B}_{n-1})$$

et on résout alors :

$$d\overline{H_m^2} = 2\sum_{i=1}^{3} Bi\, d\overrightarrow{H_{tei}} + \sum\sum (kij + k_{ji})\frac{\alpha(\overrightarrow{H_{tei}} \cdot \overrightarrow{H_{tej}})}{dt}$$

avec $\overrightarrow{H_{te}}$ : champ terrestre estimé.

Les mesures ont montré que les termes du tenseur [K] étaient très faibles si le magnétomètre était bien harmonisé et placé assez loin des grandes perturbations du porteur, donc on peut écrire :

$$[I + K]^{-1} = I - K$$

De plus, l'hypothèse que la matrice est symétrique est pratiquement vérifiée si les axes des magnétomètres sont confondus avec les axes du porteur.

La figure 3 représente le vecteur champ magnétique dont l'extrémité M', lorsque l'aéronef se déplace dans toutes les directions de l'espace, décrit un ellipsoïde E. Le procédé de compensation consiste, dans un premier temps, à transformer cet ellipsoïde en une sphère S' centrée sur O' et à la centrer ensuite sur l'origine O des axes OX, OY et OZ du magnétomètre par une translation $\overrightarrow{O'O}$.

Dans ces conditions, $\overrightarrow{OM}$ est le vecteur $\overrightarrow{Ht}$ théorique s'il n'y avait pas de perturbation. Sur le plan P (OX, OY) on peut dire que :
— l'angle $\widehat{OX, OH'}$ représente le cap magnétique perturbé $\psi'$
— et l'angle $\widehat{OX, OH}$ le cap magnétique $\psi$.

Sur la figure 4 sont représentées les diverses rotations permettant de passer des axes du repère aéronef X, Y et Z aux axes du repère géomagnétique local Nm, Em et V verticale.
— rotation de Cm, cap magnétique, autour de Z
— rotation de $\theta$, assiette longitudinale, autour de Y''
— rotation de $\varphi$, roulis, autour de X',
l'angle $\alpha$ représentant l'inclinaison de champ magnétique.

L'invention sera mieux comprise à l'aide de la description suivante de deux formes de réalisation préférées du dispositif de l'invention, représentées sur les dessins annexés, sur lesquels :

la figure 5 représente le bloc-diagramme schématique de la chaîne de cap d'un véhicule terrestre,

la figure 6 représente le bloc-diagramme de l'inclinomètre et de son circuit associé de la chaîne de la fig. 5,

la figure 7 représente le circuit de sortie du multiplexeur de sortie du bloc électronique de la chaîne de la figure 5,

la figure 8 représente une vue détaillée du bloc électronique de la chaîne de la figure 5,

la figure 9 représente le circuit du visualisateur de la chaîne de la figure 5,

la figure 10 représente le bloc-diagramme de la valise de compensation de la chaîne de la figure 5, et

la figure 11 représente le bloc-diagramme schématique de la chaîne de cap d'un aéronef, étant rappelé que

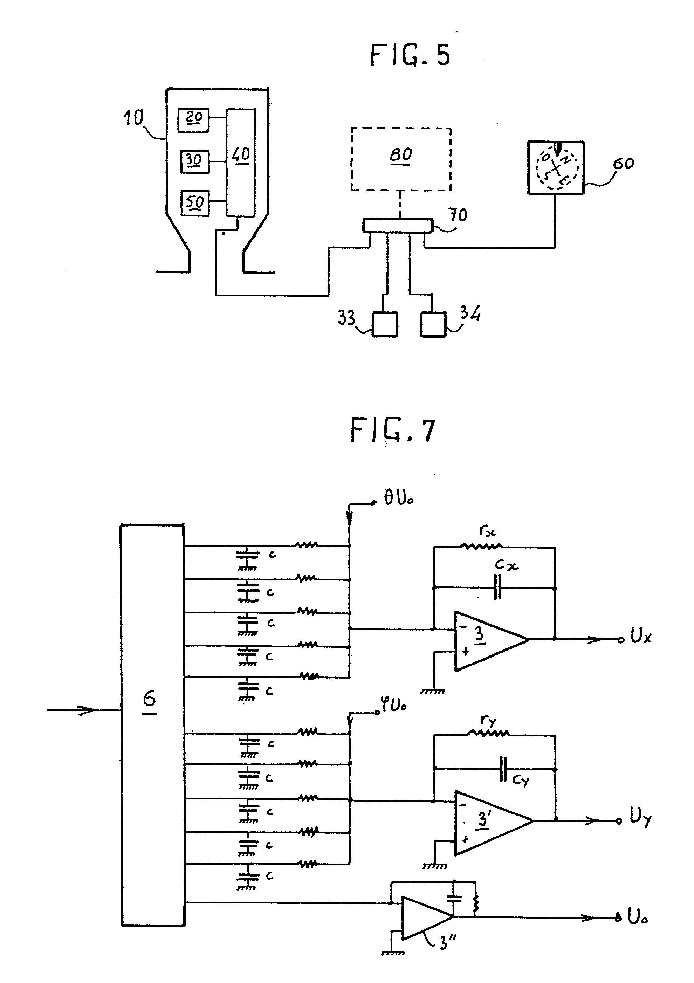

la figure 1 représente le repère du véhicule de la fig 5,

la figure 2 est une illustration des tensions fournies par le magnétomètre de la chaîne de la figure 5,

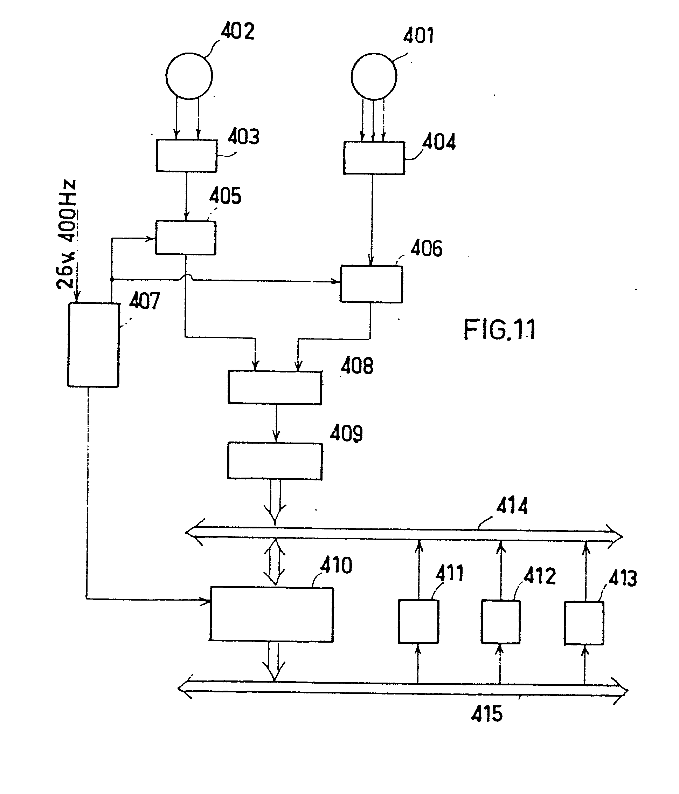

la figure 3 est une illustration des tensions fournies par le magnétomètre de la chaîne de la figure 11, et

la figure 4 représente le repère aéronef et le repère géomagnétique local attachés à la chaîne de la figure 11.

La chaîne de cap proprement dite d'un véhicule terrestre, figure 5, comporte un ensemble capteur qui comprend, à l'intérieur d'un corps 10, en matériau amagnétique :

— une alimentation 50,

— un magnétomètre statique 20, avantageusement réduit à deux axes, qui délivre les deux tensions analogiques perturbées Uxp et Uyp. Ce magnétomètre est, par exemple, du type décrit dans le brevet français N° 7 300 084 au nom de la demanderesse,

— un inclinomètre 30 (figure 6) réalisé au moyen de deux sondes de niveau électrolytiques 301, 302, et qui fournit à partir d'une tension Uo représentative de la composante verticale du champ magnétique terrestre, qui est une constante pour une latitude déterminée, deux tensions θUo et φUo de compensation du dévers du véhicule.

Cet inclinomètre 30 est associé à un circuit électronique comprenant un oscillateur 305, par exemple, de 400 Hz, suivi d'un étage de mise en forme 304, fournissant deux signaux en opposition de phase à chaque sonde de niveau 301 et 302, ainsi qu'un signal de synchronisation par une ligne 306, à des démodulateurs 307 et 307'. Les signaux présents sur des résistances $R_1$ et $R_2$, connectées respectivement en amont des démodulateurs 307 et 307', ont leur amplitude proportionnelle à la valeur absolue de l'angle d'inclinaison de chaque sonde et leur phase fournit le signe de l'angle d'inclinaison.

La démodulation synchrone et des filtres actifs 308, branchés à la sortie des démodulateurs, permettent d'obtenir un signal de sortie directement proportionnel en amplitude à l'angle d'inclinaison du capteur, et de même signe.

Les informations du magnétomètre et de l'inclinomètre sont introduites dans un bloc électronique 40, dit module de compensation, qui élabore les tensions compensées Ux et Uy, à partir des coefficients de correction de fer doux Ixx, Ixy, Iyy qui ont été stockés dans sa mémoire, par un calculateur 80, au moment de la procédure de compensation.

Ces tensions sont dirigées, par l'intermédiaire d'un boîtier de jonction 70, vers un dispositif de visualisation 60 du type rose des vents.

En outre, des capteurs placés dans le véhicule permettent d'actionner des interrupteurs 33 et 34 pour introduire dans le module 40 des facteurs complémentaires de correction de fer dur, calculés à l'avance et correspondant à des déplacements bien définis de masses magnétiques (Xτ, Yτ) et/ou à la présence temporaire de courant électrique (Xv, Yv) à bord du véhicule.

Le module de compensation 40 fonctionne de deux façons, suivant que la chaîne de cap est utilisée sur le terrain pour déterminer le cap réel ou qu'elle serve à l'acquisition des mesures pendant la procédure de compensation.

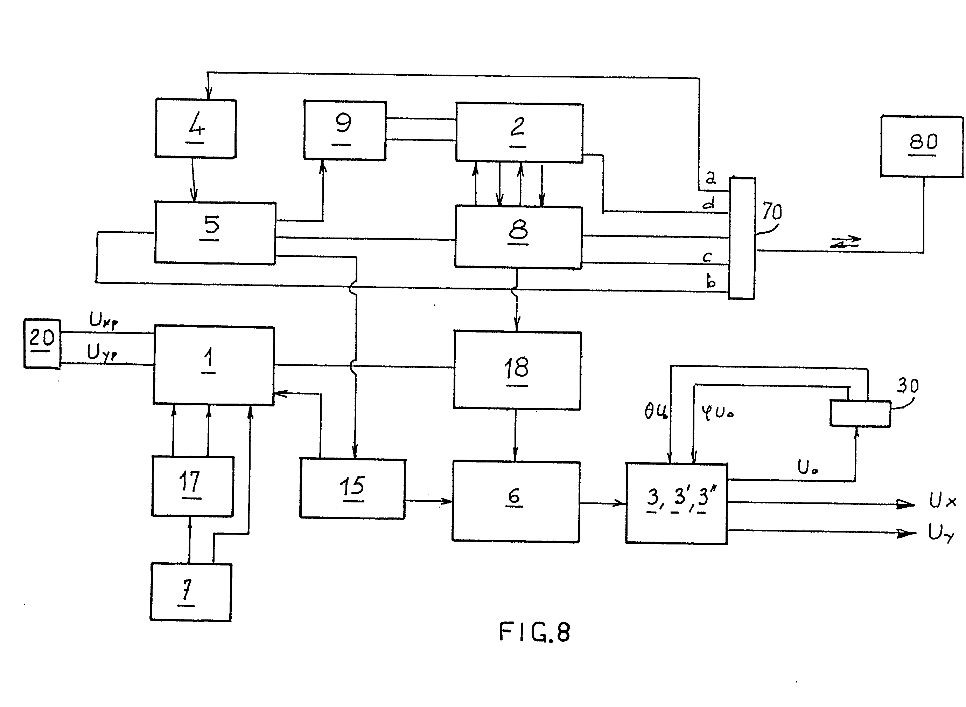

Lorsque le véhicule est en marche, le module de compensation (figure 8) élabore les deux tensions compensées :

$$Ux = UxpIxx + UypIxy - (Xo + Xτ + Xv) - θUo$$
$$Uy = UypIyy + UxpIyx - (Yo + Yτ + Yv) + φUo \qquad (4)$$

Uh étant le cap magnétique réel lu, on a :

$$Ux = Uh \cos \psi$$
$$Uy = Uh \sin \psi,$$

où Uh = kHh

Pendant la procédure de compensation, le module 40 transmet les mesures du magnétomètre et de l'inclinomètre au calculateur 80 qui en déduit les coefficients de compensation. En fin de procédure, le calculateur 80 introduit ces coefficients dans une mémoire 2 du module 40, qui peut alors effectuer les

0 041 892

corrections sur les tensions Uxp et Uyp et tenir compte du dévers du véhicule pour donner le cap magnétique réel $\psi$.

Le bloc électronique 40 (figure 8) comprend deux sous-ensembles. Un premier sous-ensemble fonctionnant en numérique par exemple, réalisé en logique C-MOS, comprenant une horloge 4, un générateur de séquence 5, et le mémoire 2 associée à un compteur d'adresses 9.

Ce sous-ensemble reçoit les signaux de commande et les informations venant du calculateur 80 au moment de la compensation. Il sert ensuite, le calculateur 80 étant déconnecté, de banque de données grâce à la mémoire 2.

Un deuxième sous-ensemble fonctionnant en analogique (tensions variables) comprenant un multiplexeur d'entrée 1, des moyens délivrant une tension de référence 7, un convertisseur numérique analogique 18, utilisé en multiplieur, un multiplexeur de sortie 6, et des amplificateurs-sommateurs de sortie 3, 3′ et 3″.

Ce sous-ensemble reçoit les informations Uxp et Uyp du magnétomètre 20 et les tensions de correction fer dur telles que Xo, Yo et d'autres tensions complémentaires Xт, Yт et Xv, Yv à ne prendre en compte que lors de modifications de la configuration magnétique du véhicule porteur correspondant à des déplacements relatifs de masses magnétiques ou à la mise en route de moteurs électriques.

Le calcul du cap s'opère de la façon suivante :

— Sous l'impulsion de l'horloge 4, le générateur de séquence 5 incrémente le compteur d'adresses 9 pour lire dans la mémoire 2, par exemple, le premier terme correcteur Ixx de la tension Ux. En même temps, par l'intermédiaire d'une commande de multiplexeur 15, le générateur 5 sélectionne le terme Uxp d'entrée venant du magnétomètre 20 ainsi que la voie de sortie Ixx du multiplexeur 6. Une fois la multiplication « UxpIxx » effectuée dans le convertisseur numérique/analogique 18, par l'intermédiaire d'un registre 8, ce résultat partiel, sous la forme d'une tension analogique fugitive, est mémorisé au moyen d'un condensateur raccordé, sur la voie (IxxUxp) à la sortie du multiplexeur 6 (figure 7).

Les termes de chaque expression Ux et Uy sont ainsi calculés un par un, et les résultats partiels sont chacun mémorisés, sous forme analogique, au moyen d'un condensateur prévu à la sortie du multiplexeur 6 sur chaque ligne de chaque terme du calcul, à savoir Ixx, Ixy, Xo, Xт et Xv d'une part, et Iyy, Iyx, Yo, Yт et Yv d'autre part.

Une fois tous les termes calculés, les sommations pour obtenir Ux et Uy, selon le système d'équations (4) sont réalisés par les deux amplificateurs-sommateurs 3 et 3′, agencés pour remplir en outre une fonction de filtrage, grâce à des condensateurs Cx, Cy et des résistances rx et ry respectivement branchés entre l'entrée et la sortie de ces amplificateurs (figure 7).

La tension Uo représentative de la composante verticale Hv du champ magnétique terrestre est élaborée de la même manière, à partir de l'information, ou profil numérique, correspondante qui est stockée dans la mémoire 2 et qui sert à multiplier la tension de référence, Vref fournie en 7, puis est appliquée à l'entrée de l'inclinomètre 30 (fig. 8) pour obtenir les tensions $\theta$Uo et $\varphi$Uo qui seront introduites dans les amplificateurs-sommateurs 3 et 3′ correspondant aux voies Ux et Uy. Les corrections de fer dur Yo, Xo et complémentaires Xт, Yт et Xv, Yv sont élaborées de la même manière à partir de la tension de référence Vref multipliée par le profil numérique des paramètres de fer dur mémorisés dans la mémoire 2 au moment de la compensation.

Au cours de la compensation, c'est-à-dire au moment de la détermination des coefficients de compensation, la chaîne de cap est reliée au calculateur 80, dit de compensation, qui pilote son fonctionnement. Par l'intermédiaire du boîtier de jonction 70, le calculateur 80 prend en compte les informations Uxp, Uyp, $\theta$Uo, $\varphi$Uo et Uo provenant de la chaîne de cap. Il élabore les paramètres de compensation et introduit ces paramètres sous forme de signaux numériques dans la mémoire 2 du module 40. Ensuite, il déconnecte l'horloge 4 par une voie (a) (fig. 8), il remet à zéro le compteur d'adresses 9 de la mémoire 2 par une voie (b), par l'intermédiaire du générateur 5 il introduit les informations de compensation sous forme numérique dans le registre 8 par une voie entrée série (c), puis il commande le transfert du contenu de ce registre 8 dans la mémoire 2 à l'addresse sélectionnée à l'aide d'un signal de validation sur une voie (d) et ce, jusqu'à ce que l'enregistrement de tous les paramètres de compensation soit effectué dans la mémoire 2. Cette mémoire 2 est rendue non volatile par une tension de sécurité délivrée, par exemple, par une pile tampon au lithium, pour ne pas perdre les informations en cas de coupure d'alimentation sur le réseau du véhicule porteur.

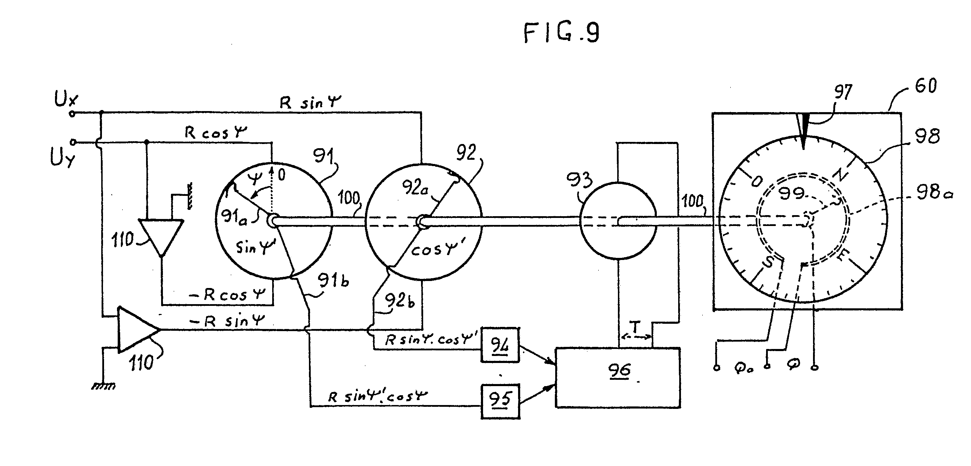

Les deux tensions Ux = R cos $\psi$ et Uy = R sin $\psi$, (voir plus haut) élaborées par le module de compensation 40 de la chaîne de cap, sont transmises au visualisateur 60 (fig. 9) ayant un double rôle. D'une part, il permet de représenter en permanence le cap magnétique suivi par le véhicule au moyen d'une rose des vents tournant devant un repère fixe et, d'autre part, d'élaborer une information analogique sous forme d'une tension Q représentative de l'écart angulaire entre le cap à suivre, préalablement affiché au moyen d'un index, et le cap effectivement tenu par le véhicule.

Ce visualisateur comporte deux potentiomètres 91, 92 rotatifs sur 360° en continu et réalisant une fonction sinusoïdale. Leurs curseurs 91a et 92a sont solidaires de l'axe 100 d'un moteur d'asservissement 93 à courant continu. Ils sont calés à 90° l'un par rapport à l'autre sur cet axe, de manière que l'un réalise la fonction sinus $\psi'$ tandis que l'autre réalise la fonction cosinus $\psi'$ ($\psi'$ étant l'angle que font les curseurs des potentiomètres avec la référence mécanique de zéro).

Le cadran et la rose des vents, également solidaires de l'axe du moteur 93, tournent avec ce dernier.

11

**0 041 892**

Le but de l'asservissement est de la réaliser $\psi' - \psi = 0$.

Pour cela, on résout l'équation suivante :

$$R \sin (\psi' - \psi) = R \sin \psi' \cos \psi - R \sin \psi \cos \psi' = 0$$

Deux amplificateurs-inverseurs 110 fournissent les tensions inverses $(- R \sin \psi)$ et $(- R \cos \psi)$.

Le premier potentiomètre 91, dont la fonction est $\sin \psi'$, donne à sa sortie 91b une tension sinusoïdale représentative de $R \sin \psi' \cos \psi$ tandis que la sortie 92b du second, dont la fonction est $\cos \psi'$, délivre une tension sinusoïdale de la forme $R \sin \psi \cos \psi'$. Après réglage du niveau de ces deux tensions au moyen de deux adaptateurs d'impédance 94 et 95, celles-ci sont appliquées sur un amplificateur différentiel 96 à grand gain, qui effectue leur différence et fournit une tension résultante au moteur d'asservissement 93 dont la rotation entraîne le cadran 98 de la rose des vents devant un index fixe 97 pour représenter le cap.

La polarité de la tension T issue de l'amplificateur 96 varie suivant que la configuration mécanique de l'ensemble correspond à $\psi' - \psi < 0$ ou $\psi' - \psi > 0$, ce qui fait tourner le moteur dans un sens ou dans l'autre en bouclage avec les potentiomètres, jusqu'à ce que l'on ait : $\psi' - \psi = 0$. A ce moment, l'angle représenté par la rose des vents devant le repère 97 correspond à l'angle $\psi$ cap magnétique corrigé.

Enfin, le visualisateur peut délivrer une tension proportionnelle à l'écart de cap par rapport au cap affiché au moyen d'un bouton. Ce bouton, muni d'un index, couplé par friction au cadran 98 de la rose, permet de positionner un curseur 99 suivant l'affichage d'un cap à suivre (fig. 7).

Ce curseur frotte sur une piste potentiométrique 98a circulaire, dont la loi de variation est linéaire sur 360° et qui est soumise à une tension Qo. La tension issue du curseur 99 est donc proportionnelle à l'angle correspondant à l'écart de cap.

Les axes orthogonaux en X et Y du magnétomètre et de l'inclinomètre sont harmonisés au montage avec ceux du véhicule. Pour cela, il faut que leurs axes respectifs en x soit chacun confondu ou parallèle avec l'axe longitudinal du véhicule.

Nous avons vu que le calcul des coefficients de compensation du véhicule se faisait au moyen d'un calculateur 80 qui peut avantageusement n'être raccordé à la chaîne de cap, au moyen du boîtier de jonction 70, que pendant le temps nécessaire à la procédure de compensation. Ce calculateur est monté avec ses périphériques dans une valise et son fonctionnement est assuré au moyen de la tension d'alimentation du véhicule, ce qui permet de réaliser une valise maniable et légère.

Par la liaison 70, cette valise mesure les tensions des capteurs de la chaîne de cap. Elle assure le calcul des coefficients de compensation. Elle introduit ensuite dans la mémoire 2 du bloc électronique 40 ces coefficients de compensation. Elle permet d'introduire l'inclinaison du champ magnétique terrestre du lieu de compensation sous la forme d'une tension Uo. On trouve cette information sur une carte géographique placée dans le couvercle de la valise.

La procédure de compensation se déroule de la façon suivante :

— on amène le véhicule sur une surface plane et horizontale. Cette surface doit être dégagée et exempte de perturbations magnétiques dues à la présence de hangars métalliques par exemple ;

— la position des éventuelles masses magnétiques mobiles du véhicule étant bien définie, on raccorde la valise de compensation à la chaîne de cap. Les informations émanant de l'inclinomètre permettent de contrôler l'horizontalité du véhicule à $\pm 0,5$ degré près.

Ensuite, au moyen d'un bouton de commande, l'opérateur déclenche l'acquisition automatique des mesures effectuées sur les capteurs ;

— on répète l'acquisition sur sept autres orientations du véhicule approximativement réparties sur 360° ;

— la valise effectue automatiquement les calculs permettant d'élaborer les coefficients de compensation. En fin de calcul, la valise transmet à la mémoire de la chaîne de cap les coefficients de compensation nécessaires pour corriger les perturbations magnétiques propres au véhicule. Un voyant lumineux signale que la compensation est terminée et la valise peut être débranchée de la chaîne de cap.

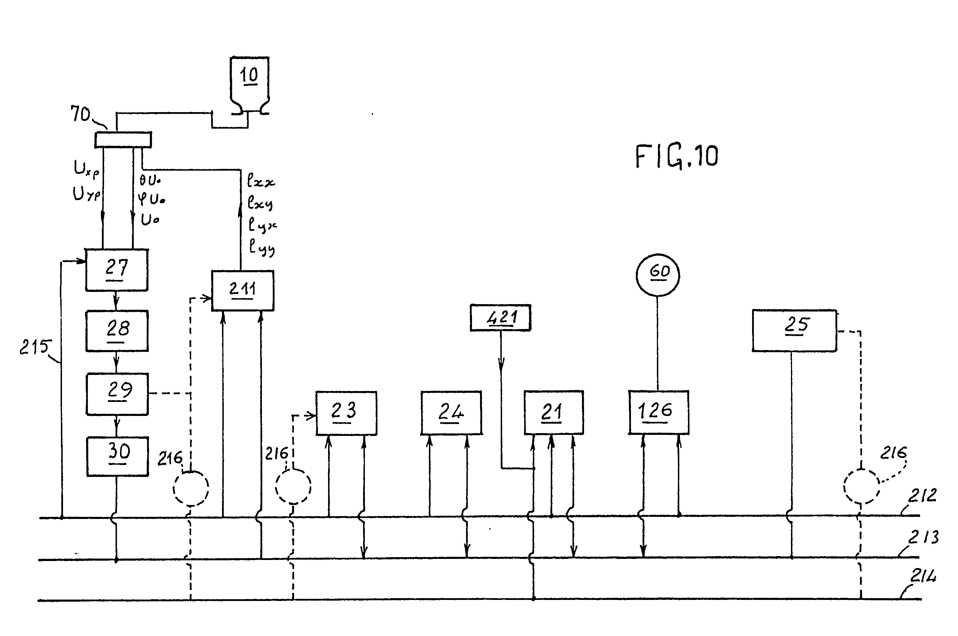

Le fonctionnement de la valise de compensation, figure 10, est le suivant :

Elle comprend un microprocesseur 21 qui est synchronisé sur une horloge 421 pour l'exécution de son programme contenu dans une mémoire morte 23.

En effet, ce programme une fois défini consiste en une série d'instructions immuables qui permettent :

— de faire l'acquisition des mesures Uxp, Uyp venant du magnétomètre ainsi que Uo, $\varphi$Uo, $\theta$Uo élaborées dans la chaîne de cap ;

— de réaliser les calculs des coefficients de compensation ;

— d'introduire les coefficients de compensation dans le module 40 de la chaîne de cap en fin de procédure de compensation.

Le déroulement des calculs nécessite également une mémoire vive 24 destinée à stocker temporairement les acquisitions des mesures de la chaîne de cap, après leur conversion d'analogique en numérique dans un convertisseur 29, ainsi que des résultats intermédiaires en cours de fonctionnement. La valise possède en outre un module de commande 25, à la disposition de l'opérateur, qui comprend essentiellement :

— un contacteur rotatif ou un rotacteur, pour la sélection du mode de fonctionnement,

— un contacteur poussoir pour la commande « continuer », permettant de faire repartir les calculs automatiques d'acquisition après chaque changement de configuration d'acquisition,

— un potentiomètre pour introduire l'inclinaison du champ magnétique terrestre, sous la forme d'une tension Uo.

Le microprocesseur 21 fait la sélection, par un bus des adresses 212, des instructions contenues dans sa mémoire de programme. Il lit ces instructions dans la mémoire morte 23 par l'intermédiaire du bus des données 213.

Ce but lui permet également de recevoir des données venant de la chaîne de cap, à savoir : Uxp, Uyp, Uo, $\theta$Uo et $\varphi$Uo sous une forme numérique par l'intermédiaire d'un multiplexeur 27, d'un filtre 28, d'un convertisseur analogique numérique 29 et d'un coupleur 30.

Enfin, le bus 213 permet également l'accès (écriture et lecture) à la mémoire vive 24 pour les stockages intermédiaires nécessaires au cours du déroulement du programme.

On désigne par « bus » des faisceaux de conducteurs communs à plusieurs circuits.

La valise possède également un module de visualisation 60, avec un interface 126 permettant, au moyen par exemple de trois lampes, de visualiser des messages photogravés tels que par exemple une alarme en cas d'anomalie au cours de l'opération de compensation. Les valeurs des angles de roulis et de tangage sont visualisées pendant les acquisitions sur des modules d'affichage du type à 7 segments constitués par exemple de diodes électro-luminescentes.

Des modules de servitudes 216, par un bus de service 214, servent à valider l'information pour les divers modules et mémoires. Par un coupleur 211, la valise émet également sur une ligne numérique les signaux de service nécessaires à l'inscription de paramètres de correction dans la chaîne de cap.

Le microprocesseur 21 sélectionne, par le multiplexeur 27, la voie correspondant au premier paramètre (par exemple Uxp) intervenant dans le calcul de la compensation.

Ce paramètre, donné sous forme analogique, est filtré en 28, codé en numérique par le convertisseur 29, et introduit sur le bus de données 213 par l'intermédiaire du coupleur 30. Le microprocesseur 21 lit cette donnée, l'enregistre et passe à l'acquisition du paramètre suivant en sélectionnant, par le bus d'adresses 212 et la ligne de sélection 215, une autre voie de multiplexeur 27.

Une fois les cinq paramètres Uxp, Uyp, Uo, $\theta$Uo et $\varphi$Uo codés et enregistrés, la valise demande à l'opérateur, par l'intermédiaire d'un voyant lumineux, de présenter une nouvelle configuration magnétique et une nouvelle orientation du véhicule pour coder et enregistrer les cinq paramètres dans cette nouvelle configuration.

Lorsque les acquisitions ont été effectuées selon huit orientations dans les divers états magnétiques possibles du véhicule, le microprocesseur 21 effectue le calcul des coefficients de compensation. Le calcul terminé, les résultats sont, au travers d'un coupleur 211, introduits sous forme numérique dans la mémoire 2 du module compensation 40 de la chaîne de cap.

Ce dispositif de correction des tensions fournies par un magnétomètre à partir des coefficients élaborés au moyen d'un calculateur au cours de la procédure ainsi décrite, permet de compenser rapidement et de manière efficace les perturbations magnétiques résultant du ferromagnétisme influençant l'environnement d'un magnétomètre.

Ce dispositif se prête particulièrement bien à la réalisation d'une « chaîne de cap » qui, embarquée sur un véhicule, élabore à tout instant le cap magnétique réel de ce véhicule.

Il importe enfin de souligner que, sans sortir du cadre de l'invention, la méthode de compensation sus-exposée peut être étendue à des applications où l'on envisagerait une modélisation géométrique des mesures magnétométriques perturbées, à l'aide d'un modèle mathématiquement plus développé que l'ellipse (par la prise en compte dans l'expression de l'erreur de cap des termes sinus 3 $\psi$, cos 3 $\psi$, etc.).

Dans cette hypothèse, la méthode de compensation consisterait à identifier les paramètres, caractéristiques du modèle géométrique adopté à partir d'un nombre satisfaisant de mesures magnétométriques relevées sur 360°, sans aucune référence de cap, puis, comme précédemment, à déterminer les coefficients de compensation de manière à pouvoir transformer la figure géométrique représentative du modèle adopté en un cercle centré sur l'origine des axes de référence.

Quant à la chaîne de cap d'un aéronef représentée sur la figure 11, elle comprend :

— un magnétomètre statique trois axes 401, constitué d'un boîtier amagnétique dans lequel sont fixées trois sondes magnétométriques. Les axes sensibles de ces sondes définissent un trièdre trirectangle qui est harmonisé, au montage, avec les axes, d'assiette longitudinale, de roulis et de lacet de l'aéronef. Chaque sonde fonctionne, selon le principe connu, qui consiste à soumettre un barreau de forte perméabilité magnétique à des cycles d'hystérésis grâce à un signal alternatif.

Le champ magnétique extérieur provoque une dissymétrie du cycle d'hystérésis qui est détectée et annulée grâce à un champ contraire créé par un courant circulant dans une bobine. A partir de ce courant, on élabore une tension qui est proportionnelle au champ extérieur ainsi mesuré ;

— un gyroscope de verticale 402, ou une unité de navigation inertielle, qui délivre, soit des tensions analogiques représentatives du roulis $\varphi$ et de l'assiette longitudinale $\theta$ de l'aéronef, soit des signaux numériques ;

— une unité de calcul 410, qui effectue, en temps réel, les calculs des coefficients de compensation et du cap magnétique réel.

# 0 041 892

Cette unité de calcul peut être par exemple un microprocesseur MC 6800 de 8 bits, de technologie N-MOS, utilisé de façon mixte, soit pour des calculs en 16 bits à virgule fixe, soit pour des calculs en 24 bits à virgule flottante.

Cette unité de calcul 410 possède également des mémoires, raccordées sur une base de données 414 et un bus d'adresses 415. Soit :

— une mémoire de programme 411 (REPROM de technologie N-MOS) de 8 K octets par exemple,

— une première mémoire vive 412, de 512 octets (type RAM de technologie C-MOS) et une seconde mémoire vive 413 de 1 kbits servant à la rétention des informations pour sauvegarder les résultats d'autocompensation d'un vol à l'autre lorsque l'alimentation électrique de l'aéronef est coupée. Cette mémoire est constituée d'une mémoire RAM de technologie C-MOS.

Des interfaces entrée/sortie permettent de réaliser l'acquisition et le codage numériques des informations d'entrée. Ce sont :

— des multiplexeurs 403 et 404

— un échantillonneur de crêtes 405 pour le gyroscope 402,

— un échantillonneur bloqueur 406 pour prélever successivement les trois tensions issues du magnétomètre 401.

Les échantillonneurs sont pilotés par un chronomètre 407 pour fournir les impulsions de commande.

Les signaux d'entrée ainsi captés sont ensuite dirigés vers un multiplexeur 408 et introduits dans un convertisseur analogique$\rightarrow$ numérique 409 avant de pouvoir être utilisés dans l'unité de calcul 410 qui élabore, sous forme numérique, les diverses informations nécessaires à la navigation soit : l'assiette longitudinale, le roulis et le cap magnétique autocompensé.

En pratique, il sera avantageux, pour réaliser le dispositif de compensation des perturbations magnétiques, de s'arranger pour que les axes du gyroscope et du magnétomètre soient harmonisés avec ceux de l'aéronef.

Le calcul des coefficients de compensation peut être effectué en temps réel, si le calculateur est embarqué ou effectué au sol, après mémorisation des informations prises en vol.

## Revendications

1. Procédé de compensation des perturbations magnétiques influençant les mesures d'un dispositif de détermination d'un cap magnétique à bord d'un véhicule terrestre comprenant un magnétomètre, fournissant des tensions analogiques proportionnelles aux composantes du champ magnétique terrestre perturbé selon ses axes de référence, dans lequel on introduit dans la mémoire d'un module de calcul associé au magnétomètre des coefficients dits de compensation permettant de corriger les informations délivrées par le magnétomètre pour obtenir le cap réel, caractérisé par le fait qu'on détermine les coefficients de compensation

— en identifiant la figure géométrique plane fermée ($C_3$) que décrit l'extrémité (M') du vecteur $\overrightarrow{(Hhp)}$ représentatif du champ magnétique perturbé lorsque le véhicule tourne sur lui-même de 360° sur un plan horizontal :

— en transformant cette figure géométrique fermée en un cercle ($C_1$), de rayon quelconque R, centré sur l'origine des axes de référence du magnétomètre et représentatif le lieu de l'extrémité M du vecteur $\overrightarrow{(Hh)}$ représentatif du champ magnétique non perturbé, et

— en calculant les coefficients servant à définir la correspondance entre tous les points de la figure géométrique fermée ($C_3$) et leurs homologues sur le cercle ($C_1$).

2. Procédé de compensation des perturbations magnétiques d'un dispositif de détermination de cap selon la revendication 1, caractérisé par le fait que la figure géométrique fermée ($C_3$) est une ellipse.

3. Procédé de compensation des perturbations magnétiques d'un dispositif de détermination de cap selon la revendication 1, caractérisé par le fait que, en plus des informations du magnétomètre, on prend en compte des informations d'un inclinomètre, associé au magnétomètre, pour vérifier que le véhicule se trouve bien sur un plan horizontal pendant la procédure de compensation, et qu'on introduit dans une mémoire du dispositif de détermination de cap les coefficients de compensation nécessaires pour élaborer deux tensions (Ux et Uy) représentatives des composantes ($\overrightarrow{Hx}$ et $\overrightarrow{Hy}$) du champ magnétique terrestre non perturbé $\overrightarrow{(H)}$.

4. Procédé de compensation selon la revendication 3, caractérisé par le fait que les informations comprenant les tensions perturbées (Uxp, Uyp) fournies par le magnétomètre, la tension constante (Uo) représentative de la composante verticale du champ magnétique terrestre et les tensions ($\varphi$Uo, $\theta$Uo) représentatives du dévers du véhicule, fournies par l'inclinomètre, sont délivrées sous forme analogique et sont multiplexées (27), filtrées (28), codées en numérique (29) et introduites sur un bus de données (213) d'un calculateur (80) qui élabore les coefficients de compensation, et que l'on transmet ces coefficients de compensation à une mémoire (2) d'un module de calcul (40) du dispositif de détermination de cap.

5. Procédé de compensation des perturbations magnétiques influençant les mesures d'un dispositif de détermination d'un cap magnétique à bord d'un aéronef comprenant un magnétomètre, fournissant des tensions analogiques proportionnelles aux composantes du champ magnétique terrestre perturbé

**0 041 892**

selon ses axes de référence, dans lequel on introduit dans la mémoire d'un module de calcul associé au magnétomètre des coefficients dits de compensation permettant de corriger les informations délivrées par le magnétomètre pour obtenir le cap réel, caractérisé par le fait que la compensation s'effectue :

— en supposant que le module de champ terrestre est constant entre deux mesures successives,

— en examinant l'évolution du module du champ magnétique terrestre perturbé dans l'espace (ellipsoïde),

— en calculant, de façon itérative, les coefficients de compensation permettant de ramener l'évolution du module du champ magnétique terrestre d'un ellipsoïde à une sphère théorique centrée sur les axes du magnétomètre, afin de définir la correspondance entre les mesures perturbées et les mesures réelles.

6. Procédé selon la revendication 5, caractérisé par le fait qu'on code en numérique les trois tensions analogiques mesurées par le magnétomètre et représentatives des composantes du champ magnétique selon les axes OX, OY, OZ du magnétomètre, avant de les introduire sur un bus de données d'un calculateur qui élabore en temps réel les coefficients de compensation.

7. Procédé selon la revendication 6, caractérisé par le fait qu'outre le calcul des coefficients de compensation, le calculateur calcule également le cap magnétique réel à partir des informations complémentaires de roulis et d'assiette longitudinale fournies par un gyroscope de verticale ou une unité de mesure inertielle.

8. Dispositif de détermination d'un cap magnétique pour la mise en œuvre du procédé de compensation selon l'une des revendications 3 et 4, comprenant :

— un magnétomètre délivrant des tensions analogiques (Uxp et Uyp) proportionnelles aux composantes (Hxp et Hyp) du champ magnétique terrestre perturbé ($\vec{Hp}$), selon les axes (OX et OY) du magnétomètre ;

— une source d'alimentation (50) ;

— un module de calcul (40) qui, à partir des mesures faites par le magnétomètre et à partir de coefficients de compensation, préalablement stockés dans une mémoire (2), donne le cap réel, caractérisé par le fait qu'il comprend

— un inclinomètre comportant des sondes sensibles au dévers du véhicule selon les mêmes axes (OX et OY) que ceux du magnétomètre, et délivrant des tensions correspondantes (θUo et φUo),

— le module de calcul (40) élaborant des tensions (Ux et Uy) correspondant aux composantes du champ magnétique terrestre non perturbé ($\vec{H}$) selon les axes (OX et OY) du magnétomètre et de l'inclinomètre, compte tenu de l'influence des angles de roulis φ et de tangage θ du véhicule.

9. Dispositif de détermination d'un cap magnétique selon la revendication 8, caractérisé par le fait que les axes du magnétomètre et de l'inclinomètre sont harmonisés avec ceux du véhicule porteur.

10. Dispositif de détermination d'un cap magnétique selon la revendication 8, caractérisé par le fait que les tensions (Ux et Uy) correspondant aux composantes du champ magnétique terrestre non perturbé, sont exploitées par des moyens de visualisation comprenant une rose des vents tournant devant un repère fixe et fournissant le cap magnétique (ψ) du véhicule.

11. Dispositif de détermination d'un cap magnétique selon la revendication 10, caractérisé par le fait que les moyens de visualisation comprennent deux potentiomètres (91, 92) rotatifs sur 360°, dont les curseurs sont décalés de 90° et sont solidaires de l'arbre d'un moteur d'asservissement (93) également lié à la rose des vents (60), et un ampli-différentiel (96) recevant les tensions fournies par les potentiomètres (91, 92) et connecté, par sa sortie, au moteur d'asservissement (93).

12. Dispositif de détermination d'un cap magnétique pour la mise en œuvre du procédé de compensation selon l'une des revendications 5 et 6, comprenant

— un magnétomètre délivrant des tensions analogiques (Uxp et Uyp) proportionnelles aux composantes (Hxp et Hyp) du champ magnétique terrestre perturbé ($\vec{Hp}$), selon les axes (OX et OY) du magnétomètre ;

— une source d'alimentation (50) ;

— un module de calcul (40), qui, à partir des mesures faites par le magnétomètre et à partir de coefficients de compensation, préalablement stockés dans une mémoire (2), donne le cap réel, caractérisé par le fait qu'il comprend :

— des moyens pour obtenir trois grandeurs électriques proportionnelles aux composantes du champ magnétique terrestre selon trois axes,

— des moyens pour fournir une référence de verticale sous forme de grandeurs électriques représentatives du roulis et de l'assiette longitudinale du porteur ;

— des moyens pour effectuer les calculs des coefficients de compensation et du cap magnétique réel à partir des grandeurs fournies par les autres dits moyens.

13. Dispositif de détermination d'un cap magnétique selon la revendication 12, caractérisé par le fait :

— que les moyens pour obtenir les grandeurs proportionnelles aux composantes du champ magnétique terrestre comprennent le magnétomètre, et

— que les moyens pour fournir une référence de verticale comprennent un gyroscope de verticale ou une unité de mesure inertielle.

14. Dispositif de détermination d'un cap magnétique selon la revendication 13, caractérisé par le fait :

— que le magnétomètre est un magnétomètre statique, trois axes (401) délivrant trois tensions analogiques (Hm$_1$, Hm$_2$, Hm$_3$), proportionnelles aux composantes du champ magnétique terrestre perturbé, selon les axes OX, OY, OZ,

— que le gyroscope de verticale (402) délivre des signaux représentatifs du roulis φ et de l'assiette longitudinale θ du véhicule,

et qu'il est prévu

— deux multiplexeurs (403) et (404),

— un premier échantillonneur de crêtes (405),

— un second échantillonneur bloqueur (406),

— un chronomètre (407), générateur d'impulsions de commande,

— un troisième multiplexeur (408) pour introduire les informations analogiques dans un convertisseur analogique-numérique (409),

— une unité de calcul (410) avec des mémoires (411, 412, 413) et des bus de données (414) et d'adresses (415), pour élaborer les coefficients de compensations nécessaires pour déterminer les composantes du champ magnétique non perturbé et en déduire le cap magnétique réel.

15. Dispositif de détermination d'un cap magnétique selon la revendication 12, caractérisé par le fait que les axes du magnétomètre et du gyroscope sont harmonisés avec ceux de l'aéronef.

**Claims**

1. Process for compensating the magnetic disturbances influencing the measurements of a device determining a magnetic heading on board a land vehicle comprising a magnetometer, furnishing analog voltages proportional to the components of the disturbed magnetic field of the earth, along its reference axes, in which so-called compensation coefficients are introduced into the memory of a computer module associated with the magnetometer, which make it possible to correct the information delivered by the magnetometer to obtain the real heading, characterized in that the compensation coefficients are determined

— by identifying the closed plane geometrical figure (C$_3$) described by the end (M') of the vector $(\overrightarrow{Hhp})$ indicative of the disturbed magnetic field when the vehicle rotates on itself through 360° on a horizontal plane ;

— by transforming this closed geometrical figure into a circle (C$_1$), of any radius R, centred on the origin of the reference axes of the magnetometer and representing the locus of the end M of the vector $(\overrightarrow{Hh})$ representative of the non-disturbed magnetic field, and

— by calculating the coefficients serving to define the correspondence between all the points of the closed geometrical figure (C$_3$) and their homologues on the circle (C$_1$).

2. Process for compensating the magnetic distrubances of a heading determining device according to Claim 1, wherein the closed geometrical figure (C$_3$) is an ellipse.

3. Process for compensating the magnetic disturbances of a heading determining device according to Claim 1, wherein, in addition to the information from the magnetometer, the information from an inclinometer, associated with the magnetometer, is taken into account, to check that the vehicle is indeed on a horizontal plane during the compensation procedure, and the compensation coefficients necessary for elaborating two voltages (Ux and Uy) indicative of the components ($\overrightarrow{Hx}$ and $\overrightarrow{Hy}$) of the non-disturbed magnetic field of the earth ($\overrightarrow{H}$) are introduced into a memory of the heading determining device.

4. Compensation process according to Claim 3, wherein the information comprising the disturbed voltages (Uxp, Uyp) furnished by the magnetometer, the constant voltage (Uo) indicative of the vertical component of the earth's magnetic field, and the voltages (φUo, θUo) indicative of the slope of the vehicle, furnished by the inclinometer, are delivered in analog form and are multiplexed (27), filtered (28), digitally coded (29) and introduced on a data bus (213) of a computer (80) which elaborates the compensation coefficients and these compensation coefficients are transmitted to a memory (2) of a computer module (40) of the heading determining device.

5. Process for compensating the magnetic disturbances influencing the measurements of a device determining a magnetic heading on board, an aircraft comprising a magnetometer, furnishing analog voltages proportional to the components of the disturbed magnetic field of the earth, along its reference axes, in which so-called compensation coefficients are introduced into the memory of a computer module associated with the magnetometer, which make it possible to correct the information delivered by the magnetometer to obtain the real heading, characterized in that the compensation coefficients are determined

— by assuming that the module of the earth's field is constant between two successive measurements ;

— by examining the evolution of the module of the disturbed magnetic field of the earth in space (ellipsoid) ;

— by computing in iterative manner the compensation coefficients enabling the evolution of the module of the earth's magnetic field to be returned from an ellipsoid to a theoretical sphere centred on

**0 041 892**

the axes of the magnetometer, in order to define the correspondence between the disturbed measurements and the real measurements.

6. Process according to Claim 5, wherein the three analog voltages measured by the magnetometer and indicative of the components of the magnetic field along the axes OX, OY, OZ of the magnetometer are digitally coded, before introducing them on a data bus of a computer which elaborates the compensation coefficients in real time.

7. Process according to Claim 6, wherein, in addition to calculating the compensation coefficients, the computer also calculates the real magnetic heading from the complementary roll and pitch attitude data furnished by a vertical gyroscope or an inertial measuring unit.

8. Device for determining a magnetic heading for carrying out the compensation process according to one of Claims 3 and 4, wherein it comprises :
— a magnetometer delivering analog voltages (Uxp and Uyp) proportional to the components (Hxp and Hyp) of the disturbed magnetic field (Hp) of the earth, along the axes (OX and OY) of the magnetometer ;
— a source of supply (50) ;
— a computer (40) which, from the measurements made by the magnetometer and from compensation coefficients, previously stored in a memory (2), gives the real heading, characterized in that it comprises :
— an inclinometer comprising sensors sensitive to the slope of the vehicle along the same axes (OX and OY) as those of the magnetometer, and delivering corresponding voltages ($\theta$Uo and $\varphi$Uo),
— the computer module (40) elaborating voltages (Ux and Uy) corresponding to the components of the non-disturbed magnetic field (H) of the earth along the axes (OX and OY) of the magnetometer and of the inclinometer, taking into account the influence of the angles of roll $\varphi$ and of pitch $\theta$ of the vehicle.

9. Device for determining a magnetic heading according to Claim 8, wherein the axes of the magnetometer and of the inclinometer are harmonised with those of the carrier vehicle.

10. Device for determining a magnetic heading according to Claim 8, wherein the voltages (Ux and Uy) corresponding to the components of the non-disturbed magnetic field of the earth are exploited by display means comprising a compass card rotating in front of a fixed reference mark and furnishing the magnetic heading ($\psi$) of the vehicle.

11. Device for determining a magnetic heading according to Claim 10, wherein the display means comprises two potentiometers (91, 92) rotating through 360° of which the sliders are offset by 90° and are fast with the shaft of a servo-control motor (93) also connected to the compass card (60), and an amplidifferential (96) receiving the voltages furnished by the potentiometers (91, 92) and connected by its output to the servo-control motor (93).

12. Device for determining a magnetic heading for carrying out the compensation process according to one of Claims 5 and 6, comprising
— a magnetometer delivering analog voltages (Uxp and Uyp) proportional to the components (Hxp and Hyp) of the disturbed magnetic field (Hp) of the earth, along the axes (OX and OY) of the magnetometer ;
— a source of supply (50) ;
— a computer module (40) which, from the measurements made by the magnetometer and from compensation coefficients, previously stored in a memory (2), gives the real heading, characterized in that it comprises
— an inclinometer comprising sensors sensitive to the slope of the vehicle along the same axes (OX and OY) as those of the magnetometer, and delivering corresponding voltages ($\theta$Uo and $\varphi$Uo), characterized in that it comprises
— means for obtaining three electrical magnitudes proportional to the components of the earth's magnetic field along three axes,
— means for furnishing a vertical reference in the form of electrical magnitudes indicative of the roll and the pitch attitude of the carrier,
— means for effecting calculations of the compensation coefficients and of the real magnetic heading from the magnitudes furnished by the said other means.

13. Device for determining a magnetic heading according to Claim 12, wherein
— the means for obtaining the magnitudes proportional to the components of the earth's magnetic field comprise the magnetometer, and
— the means for furnishing a vertical reference comprise a vertical gyroscope or an inertial measuring unit.

14. Device for determining a magnetic heading according to Claim 13, wherein
— the magnetometer is a three-axis static magnetometer (401) delivering three analog voltages (Hm$_1$, Hm$_2$, Hm$_3$) proportional to the components of the disturbed magnetic field of the earth, along its axes OX, OY, OZ ;
— the vertical gyroscope (402) delivers signals indicative of the roll $\varphi$ and the pitch attitude $\theta$ of the vehicle, and there is provided :
— two multiplexers (403) and (404),
— a first peak sampler (405),

17

— a second sample and hold (406),

— a chronometer (407) generating control pulses,

— a third multiplexer (408) for introducing the analog information into an analog-to-digital converter (409),

— a computer unit (410) with memories (411, 412, 413) and data and address buses (414, 415), for elaborating the compensation coefficients necessary for determining the components of the non-disturbed magnetic field and for deducing the real magnetic heading therefrom.

15. Device for determining the magnetic heading according to Claim 12, wherein the axes of the magnetometer and of the gyroscope are harmonised with those of the aircraft.

## Ansprüche

1. Verfahren zur Kompensation von magnetischen Störungen, welche die Messungen einer Vorrichtung zur Bestimmung eines Magnetkurses and Bord eines Landfahrzeuges stören mit einem Magnetometer, das analoge Spannungswerte liefert, welche den Komponenten des gestörten Erdmagnetfeldes längs seiner Bezugsachsen proportional sind, und wobei dem Speicher eines dem Magnetometers zugeordneten Rechnermoduls Kompensationskoeffizienten zugeführt werden, welche eine Korrektur der vom Magnetometer gelieferten Informationen erlauben, um den Echtkurs zu erhalten, dadurch gekennzeichnet, daß die Kompensationskoeffizienten bestimmt werden

— durch Erfassung der geschlossenen ebenen geometrischen Figur ($C_3$), welche das Ende (M') des entsprechende Vektors ($\overline{Hhp}$) des gestörten Magnetfeldes bestimmt, wenn sich das Fahrzeug um seine eigene Achse in einer horizontalen Ebene um 360° dreht :

— durch Transformation dieser geschlossenen Figur in einen Kreis ($C_1$) mit beliebigem Radius R und einem Mittelpunkt im Ursprung der Bezugsachsen des Magnetometers, welcher Kreis dem geometrischen Ort des Endes M des Vektors ($\overline{Hh}$) darstellt, welcher dem nicht gestörten Magnetfeld entspricht, und

— durch Errechnen des Koeffizienten, welche die Zuordnung zwischen allen Punkten der geschlossenen geometrischen Figur ($C_3$) und ihren Homologen am Kreis ($C_1$) definieren.

2. Verfahren zur Kompensation der magnetischen Störungen einer Vorrichtung zur Bestimmung eines Kurses nach Anspruch 1, dadurch gekennzeichnet, daß die geschlossene geometrische Figur ($C_3$) eine Ellipse ist.

3. Verfahren zur Kompensation der magnetischen Störungen einer Vorrichtung zur Bestimmung eines Kurses nach Anspruch 1, dadurch gekennzeichnet, daß zusätzlich zu den Informationen des Magnetometers die Informationen eines dem Magnetometer zugeordneten Neigungsmessers berücksichtigt werden, um festzustellen, ob sich das Fahrzeug während des Kompensationsvorganges in einer Horizontalebene befindet, und daß in einen Speicher der Kursbestimmungsvorrichtung die zur Erzeugung von zwei dem nicht gestörten Erdmagnetfeld ($\overline{H}$) entsprechenden Spannungen (Ux und Uy) erforderlichen Kompensationskoeffizienten eingegeben werden.

4. Verfahren zur Kompensation nach Anspruch 3, dadurch gekennzeichnet, daß die Informationen, welche die gestörten, vom Magnetometer gelieferten Spannungen (Uxp, Uyp), die der Vertikalkomponente des Erdmagnetfeldes entsprechende konstante Spannung (Uo) und die der Schräglage des Fahrzeuges entsprechenden und vom Neigungsmessergelieferten/Spannungen ($\varphi$Uo, $\theta$Uo) umfassen, in analoger Form geliefert und multiplexiert (27), gefiltert (28), numerisch codiert (29) und an einen. Datenübertragungsbus (213) eines die Kompensationskoeffizienten erstellenden Rechners (80) gelegt werden, und daß diese Kompensationskoeffizienten einem Speicher (2) eines Rechnermoduls (40) der Kurbestimmungsvorrichtung eingegeben werden.

5. Verfahren zur Kompensation von magnetischen Störungen, welche die Messungen einer Vorrichtung zur Bestimmung eines Magnetkurses and Bord eines Luftfahrzeuges stören mit einem Magnetometer, das analoge Spannungswerte liefert, welche den komponenten des gestörten Erdmagnetfeldes längs seiner Bezugsachsen proportional sind, und wobei dem Speicher eines dem Magnetometer zugeordneten Rechnermoduls Kompensationskoeffizienten zugeführt werden, welche eine Korrektur der vom Magnetometer gelieferten Informationen erlauben, um den Echtkurs zu erhalten, dadurch gekennzeichnet, daß die Kompensation derart erfolgt, daß

— angenommen wird, daß der Betrag des Erdmagnetfeldes zwischen zwei aufeinanderfolgenden Messungen konstant ist,

— im Raum die Evolution des Betrages des gestörten Erdmagnetfeldes festgestellt wird (Ellipsoid),

— in iterativer Weise jene Kompensationskoeffizienten berechnet werden, welche eine Rücktransformation der Evolution des Betrages des Erdmagnetfeldes von einem Ellipsoid auf eine mit Bezug auf die Achsen des Magnetometers zentrierte Kugel erlauben, um die Zuordnung zwischen den gestörten Meßwerten und den echten Meßwerten zu definieren.

6. Verfahren nach Anspruch 5, dadurch gekennzeichnet, daß die drei analogen Meßspannungswerte des Magnetometers, welche den Magnetfeldkomponenten längs der Achsen OX, OY, OZ des Magnetometers entsprechen, numerisch codiert werden bevor sie an einen Datenübertragungsbus eines im Echtzeitverfahren die Kompensationskoeffizienten ermittelnden Rechners gelegt werden.

18

0 041 892

7. Verfahren nach Anspruch 6, dadurch gekennzeichnet, daß der Rechner außer der Berechnung der Kompensationskoeffizienten auch noch unter Berücksichtigung der von einem Vertikalkreisel oder einer Trägheitsmeßeinrichtung ermittelten zusätzlichen Informationen bezüglich Rollbewegung und Trimmwinkel den Echtmagnetkurs ermittelt.

8. Vorrichtung für eine Magnetkursbestimmung zur Durchführung des Kompensationsverfahrens nach einem der Ansprüche 3 und 4 mit

— einem Magnetometer, das den in Richtung seiner Achsen (OX und OY) vorliegenden Komponenten (Hxp und Hyp) des gestörten Erdmagnetfeldes ($\vec{Hp}$) proportionale Analogspannungen (Uxp und Uyp) liefert,

— einer Energieversorgungsquelle (50) ;

— einem Rechnermodul (40), der ausgehend von den Meßdaten des Magnetometers und vorgängig in einem Speicher (2) gespeicherten Kompensationskoeffizienten den Echtkurs ermittelt, dadurch gekennzeichnet,daß sie :

— einen Neigungsmesser mit Sonden umfaßt, welche auf Schräglagen des Fahrzeuges gegenüber die selben Achsen (OX und OY) wie jenen des Magnetometers ansprechen und die entsprechende Spannungen ($\theta$Uo und $\varphi$Uo) liefern,

— und daß der Rechnermodul (40) unter Berücksichtigung des Einflusses des Rollwinkels ($\varphi$) und des Nickwindels ($\theta$) des Fahrzeuges Spannungen (Ux und Uy) errechnet, welche den Komponenten des nicht gestörten Erdmagnetfeldes ($\vec{H}$) längs der Achsen (OX und OY) des Magnetometers und des Neigungsmessers entspricht.

9. Vorrichtung zur Magnetkurbestimmung nach Anspruch 8, dadurch gekennzeichnet, daß die Magnetometer- und Neigungsmesserachsen mit jenen des Trägerfahrzeuges übereinstimmen.

10. Vorrichtung zur Magnetkursbestimmung nach Anspruch 8, dadurch gekennzeichnet, daß die den Komponenten des nicht gestörten Erdmagnetfeldes entsprechenden Spannungen (Ux und Uy) durch eine Anzeigeeinrichtung ausgewertet werden, welche eine sich vor einer festen Markierung drehende Windrose umfaßt und den Magnetkurs ($\psi$) des Fahrzeuges liefert.

11. Vorrichtung zur Magnetkursbestimmung nach Anspruch 10, dadurch gekennzeichnet, daß die Anzeigeeinrichtung 360° Drehpotentiometer (91, 92), deren Schleifkontakte um 90° gegeneinander versetzt und mit der Welle eines an die Windrose (60) angeschlossenen Regel- bzw. Steuermotors (93) fest verbunden sind, und einen Differenzverstärker (96) aufweist, an dem von Potentiometern (91, 92) herrührende Spannungen anliegen und dessen Ausgang an den Regel- bzw. Steuermotor (93) angeschlossen ist.

12. Vorrichtung zur Magnetkursbestimmung für die Durchführung des Kompensationsverfahrens nach einem der Ansprüche 5 und 6, mit

— einem Magnetometer, das den in Richtung seiner Achsen (OX und OY) vorliegenden Komponenten (Hxp und Hyp) des gestörten Erdmagnetfeldes ($\vec{Hp}$) proportionale Analogspannungen (Uxp und Uyp) liefert,

— einer Energieversorgungsquelle (50) ;

— einem Rechnermodul (40) der ausgehend von den Meßdaten des Magnetometers und vorgängig in einem Speicher (2) gespeicherten Kompensationskoeffizienten den Echtkurs ermittelt, dadurch gekennzeichnet, daß sie umfaßt

— eine Einrichtung zur Erzeugung von drei elektrischen Größen, welche den Komponenten des Erdmagnetfeldes längs dreier Achsen jeweils proportional sind,

— eine Einrichtung zur Erzeugung einer Bezugsvertikalen in Form elektrischer Größen, welche der Rollbewegung und dem Längentrimmwinkel des Trägerfahrzeuges entsprechen,

— einer Einrichtung zur Berechnung der Kompensationskoeffizienten und des magnetischen Echtkurses ausgehend von den von den genannten Einrichtungen gelieferten Größen.

13. Vorrichtung zur Magnetkursbestimmung nach Anspruch 12, dadurch gekennzeichnet,

— daß die Einrichtung zur Erzeugung der dem Komponenten des Erdmagnetfeldes proportionalen Größen das Magnetometer umfaßt und

— daß die Einrichtung zur Erzeugung der Bezugsvertikalen ein Vertikalkreisel oder eine Trägheitsmeßeinrichtung umfaßt.

14. Vorrichtung zur Magnetkursbestimmung nach Anspruch 13, dadurch gekennzeichnet,

— dab das Magnetometer ein statisches Dreiachsen-Magnetometer (41) ist, welches längs seiner Achsen OX, OY, OZ drei Analogspannungen ($Hm_1$, $Hm_2$, $Hm_3$) liefert, welche Spannungen jeweils einer der Komponenten des gestörten Erdmagnetfeldes proportional sind,

— daß das Vertikalkreisel (402) Signale liefert, welche dem Rollwinkel $\varphi$ und dem Längen-trimmwinkel $\theta$ des Fahrzeuges entsprechen, und daß vorgesehen sind

— zwei Multiplexer (403 und 404),

— eine erste Spitzenwertabtatschaltung (405),

— eine zweite Blockierabtastschaltung (406),

— ein Taktgenerator (407) zur Erzeugung von Ansteuerimpulsen bzw. Taktimpulsen,

— ein dritter Multiplexer (408) zur Einführung der Analog-Informationen in einen Analog-Digital-Konverter (409),

— eine Rechnereinheit (410) mit Speicher (411, 412, 413) sowie Datenbus (414) und Adressenbus

19

(415), um die zur Bestimmung des ungestörten Magnetfeldes notwendigen Kompensationskoeffizienten zu bestimmen und ausgehend von diesen den Echtmagnetkurs zu ermitteln.

15. Vorrichtung zur Magentkursbestimmung nach Anspruch 12, dadurch gekennzeichnet, daß die Achsen des Magnetometers und des Kreisels mit jenen des Luftfahrzeuges übereinstimmen.

FIG.1

FIG.6

FIG. 2

FIG. 3

0 041 892

FIG.4

# FIG. 5

# FIG. 7

FIG.8

0 041 892

# FIG.9

0 041 892

FIG.10

FIG.11